# EUROPÄISCHE PATENTSCHRIFT

(11) **EP 1 179 126 B1**
(45) Veröffentlichungstag und Bekanntmachung des Hinweises auf die Patenterteilung: **15.12.2004**
(21) Anmeldenummer: 00938551.9
(22) Anmeldetag: 12.05.2000
(51) Int. Cl.: F01N 3/28

(54) **KATALYSATORTRÄGERKÖRPER**
CATALYST SUPPORTING BODY
SUPPORT DE POT CATALYTIQUE

(30) Priorität: 14.05.1999 DE 19922355
(43) Veröffentlichungstag der Anmeldung: 13.02.2002
(73) Patentinhaber: Swars, Helmut, 51429 Bergisch Gladbach (DE)
(72) Erfinder: Swars, Helmut, 51429 Bergisch Gladbach (DE)
(74) Vertreter: Lippert, Stachow, & Partner
(86) Internationale Anmeldenummer: PCT/DE2000/001495
(87) Internationale Veröffentlichungsnummer: WO 2000/070208

(56) Entgegenhaltungen:
- EP-A- 0 870 909
- EP-A- 0 887 521
- DE-A- 19 530 850
- US-A- 4 098 722
- US-A- 5 177 960
- US-A- 5 460 790
- US-A- 5 643 484
- US-A- 5 667 875
- PATENT ABSTRACTS OF JAPAN vol. 1999, no. 02, 26. Februar 1999 (1999-02-26) & JP 10 309475 A (USUI INTERNATL IND CO LTD), 24. November 1998 (1998-11-24)
- PATENT ABSTRACTS OF JAPAN vol. 1997, no. 08, 29. August 1997 (1997-08-29) & JP 09 103686 A (YUTAKA GIKEN CO LTD), 22. April 1997 (1997-04-22)

## Beschreibung

Die Erfindung betrifft einen Katalysatorträgerkörper mit. einer vielzahl von durchgehenden Strömungspfaden für ein fluides Medium und sich in Längsrichtung der Strömungspfade erstrekkenden Trägerelementen für ein Katalysatormaterial gemäß dem Oberbegriff von Anspruch 1.

Ein derartiger Trägerkörper ist aus der EP 0 430 945 B1 bekannt, welcher aus zumindest teilweise strukturierten Blechen aufgebaut ist, wobei durch die Abfolge der glatten und wellenförmig strukturierten, im Wabenkörper aneinanderliegenden Bleche für ein Fluid durchlässige und voneinander separierte Kanäle ausgebildet werden. Zur einfacheren Herstellung des Wabenkörpers werden die Blechstapel umeinander verschlungen.

Ein derartiger Katalysatorträgerkörper ist hinsichtlich verschiedener Aspekte verbesserungsfähig.

Aufgrund der sehr kleinen Strömungskanäle mit sinusförmigem Querschnitt entstehen in den Zwickeln bzw. Engstellen der Kanäle Bereiche, die mit dem fluiden Medium in den zentralen hydraulisch wirksamen Durchströmungsquerschnitten nur schwer in Kontakt kommen, da sich hier aufgrund der zähen Haftung des fluiden Mediums an den Teilflächen des Kanalumfangs dickere Strömungsgrenzschichten einstellen bzw. Toträume mit inertem, d.h. bereits umgesetzten, Medium ausbilden, das nicht oder nur verzögert abtransportiert wird. Die katalytische Wirksamkeit der so abgedeckten Teilflächen ist gering und daher die Gesamteffektivität der im Katalysator eingesetzten Edelmetallbeschichtungen verbesserbar. Dies führt dazu, daß das Mindestvolumen des Katalysators und damit auch dessen Gewicht nach unten begrenzt sind. Generell soll daher das unmittelbar an der Beschichtung ohne Reaktions- und Stofftranporthemmung so effektiv wie möglich umgesetzte Medium bzw. Gas möglichst schnell und gleichmäßig mit der Durchströmung abtransportiert werden und nicht als dickere und inerte zu langsam abfließende und teilweise stagnierendend Medienschicht einen größeren Teil der Beschichtungsfläche effektivitätsmindernd belegen.

Des weiteren muß der einsatzbereite Katalysator und damit auch der Trägerkörper die Anforderung erfüllen, daß der Druckverlust beim Durchströmen des fluiden Mediums durch den Trägerkörper möglichst gering und gleichmäßig ist. Des weiteren sollte das Gesamtgewicht des Katalysators, insbesondere unter Berücksichtigung der zusätzlich aufgebrachten porösen katalytisch wirksamen Beschichtung, bei hoher Effektivität möglichst gering sein, damit die Trägheit des Katalysators bei dessen Aufheizphase zur Erreichung der Betriebstemperatur gering bleibt, wie dies z.B. im Automobilbereich erwünscht ist. Einer Vergrößerung der Katalysatoraktivität durch immer weitere Verringerung des Durchmesers der Strömungskanäle und Vergrößerung der gesamten inneren Oberfläche sind daher Grenzen gesetzt.

Der insgesamt schädliche Volumenanteil mit nur Stütz- und Beabstandungsfunktion des Trägerkörpers aus ungenutzten Strukturwänden, Beschichtungsmaterial und inerten ruhenden Medienvolumina, der bis zur Hälfte des Querschnitts und mehr als die Hälfte des Volumens ausmachen kann, soll daher minimiert werden.

Des weiteren sind an Katalysatoren, insbesondere auch im Kraftfahrzeugbereich, hohe Anforderungen hinsichtlich der Temperaturgleichmäβigkeit in der Struktur zu stellen, da die Katalysatoren insbesondere während der Aufheiz- und Abkühlphasen starken Temperaturschwankungen und infolge dessen zeitlich verlängerter chemischer Reaktionshemmung bei Kaltstart-, Wiederstart-, Teilast- und Kaltwetterbetriebbesonders im Trägerkörperrandbereich ausgesetzt sind.

Des weiteren sollte der Katalysatorträgerkörper derart konstruiert sein, daß eine möglichst homogene Druck- und Geschwindigkeitsverteilung des fluiden Mediums über den Trägerkörperquerschnitt erzielt und damit die effektive Durchströmverweilzeit gleichmäßiger und somit länger wird.

Die US 4,098,722, die US 5,460,790 und die US 5,177,960 beschreiben Katalysatorträgerkörper, die aus Stapeln von alternierend abgelegten im Wesentlichen ebenen und gewellten Blechlagen bestehen. Die Blechlagen sind unter Ausbildung von in Längsrichtung des Trägerkörpers verlaufenden Abkantungen profiliert.

Die DE 195 30 850 A1 beschreibt einen Wabenkörper, der zumindest teilweise aus schichtartig aufgebauten Metallblechlagen besteht. Mindestens eine Schicht der Blechlagen besteht aus chromenthaltendem Stahl und mindestens eine Schicht besteht im wesentlichen aus Aluminium, wobei die Schichten bei einer späteren Wärmebehandlung durch Diffusion weitgehend homogenisiert werden. Zumindest ein Teil der Blechlagen weist Strukturen auf, die die Elastizität des Wabenkörpers vor und bei der Wärmebehandlung erhöhen. Die gewellten Blechlagen können teilweise von den ebenen Blechlagen beabstandet sein, so dass die Wellenrücken der gewellten Blechlagen umströmbar sind.

Die US 5,643,484 besteht aus gestapelten ebenen, und gewellten-Blechlagen, wobei die gewellten Blechlagen Ausnehmungen aufweisen können, um den elektrischen Widerstand des beheizten Wabenkörpers einstellen zu können.

Der Erfindung liegt daher die Aufgabe zugrunde, einen Katalysatorträgerkörper zu schaffen, der hinsichtlich der oben genannten Probleme optimiert ist und insbesondere bei gleicher oder verbesserter Effizienz zu einem Katalysator mit reduziertem Edelmetall- und Werkstoffeinsatz in einem reduzierten oder optimierten Bauvolumen führt, und der bei Temperaturlastwechseln besonders stabil ist.

Diese Aufgabe wird erfindungsgemäβ durch einen Trägerkörper mit den Merkmalen des Anspruchs 1 und einem Katalysator nach Anspruch 19 gelöst. Die in Längsrichtung der Strömungspfade umströmbaren Kanten, die von dem laminar strömenden fluiden Medium ohne signifikante Erhöhung eines Druckverlustes umströmt werden und bei denen aufgrund deren Führung in Längsrichtung der Strömungspfade eine vergleichsweise intensiver Kontakt und im Mittel hohe Kontaktzeit mit einem gegebenen Volumeninkrement des fluiden Mediums gegeben ist, führen zu einer deutlichen Verbesserung der Katalysatoreffektivität. Die umströmbaren Kanten ragen in das strömende Medium hinein und vergrößern mit einer darin vergrößerten Strömungsturbulenz insgesamt die spezifische Konversionsfähigkeit der Beschichtungsträgerfläche beträchtlich verglichen mit den ebenen Bereichen der Seitenwände enger unrunder Strömungskanäle und stellen somit katalytisch besonders wirksame Bereiche dar. Die Kanten können dabei sowohl winkelig als auch abgerundet ausgeführt sein, z.B. in Form von Drähten oder Röhrchen mit rundem Querschnitt.

Unter "Trägerelementen" seien im Nachfolgenden stets solche mit umströmbaren Kanten verstanden, worunter auch solche mit vollumfänglich umströmbaren Profilen fallen, sofern nichts gegenteiliges gesagt ist.

Die umströmbaren Kanten verlaufen vorzugsweise parallel oder spitzwinkelig zur Längsrichtung des Katalysatorträgerkörpers.

Die Gesamtlänge der umströmbaren Kanten bezogen auf die Gesamtinnenoberfläche des Trägerkörpers und/ oder deren Anordnung und Häufigkeitsverteilung über den Querschnitt und das Volumen des Trägerkörpers ist dabei so bemessen, daß die den erfindungsgemäßen Trägerelementen zuzuordnende katalytische Aktivität signifikant ist gegenüber der Gesamteffektivität des Katalysators, z.B. größer 10% der Gesamteffektivität beträgt. Insbesondere kann die den Trägerelementen zugeordnete katalytische Effektivität bzw. Wirksamkeit größer sein, als die der nicht mit den erfindungsgemäßen Trägerelementen versehenen Oberflächen- bzw. Volumenbereiche. Einem Trägerelement wird dabei ein Querschnittsbereich des Trägerkörpers zugeordnet, in dem noch eine Kontaktierung bzw. stoffliche Umsetzung des fluiden Mediums an der Trägerelementkante erfolgt.

Das Verhältnis der Länge umströmbarer Kanten zu dem durchströmbaren Volumen des Trägerkörpers, das als Summe der hydraulischen Querschnitte über die Trägerkörperlänge zu berechnen ist, kann 1 cm je 5 bis 0.8 cm³ oder weniger, gemittelt über das gesamte Trägerkörpervolumen, betragen, was einer durchgehenden umströmbaren Kante in einem Kanal mit einem hydraulischen Radius von ca. 13 bzw. 5 mm entspricht. Der hydraulische Querschnitt wird dabei jeweils durch einen an den Kanalwänden anliegenden eingeschriebenen Kreis definiert, bei einem zusammenhängendem Gasplenum durch den Radius aneinanderstoßender Kreise. Bei mehrrippigen Stegen ist ein entsprechendes Vielfaches der Steglänge zu veranschlagen, bei runden Drähten oder Profilen zumindest die doppelte Länge, da diese von entgegengesetzten Seiten her anströmbar sind.

Die Gesamtlänge der umströmbaren Kanten entlang eines Strömungspfades kann ein Vielfaches des Abstandes benachbarter Kanten voneinander betragen. Insbesondere gilt dies für die durchgehende Länge einer einzelnen umströmbaren Kante, wobei die Trägerelemente bzw. Kanten auch axial unterbrochen bzw. mehrere Trägerelemente mit umströmbaren Kanten in Längsrichtung eines Strömungspfades hintereinander beabstandet angeordnet sein können. Sind die umströmbaren Kanten z.B. bogen- oder wendelförmig ausgebildet oder an verdrillten oder gebogenen Profilen wie separaten Trägerelementen z.B. in Form von Drähten oder Stegen angeordnet, so ist die tatsächliche Kantenlänge zu berücksichtigen, die die Länge des Trägerkörpers deutlich übersteigen kann. Die verdrillten Bauteile können dabei jeweils mehrere seitlich vorstehende ebenfalls verdrillte Rippen aufweisen oder als Spiralfedern ausgeführt sein. Die verdrillten bzw. gewendelten Kanten verlaufen vorzugsweise spitzwinkelig zur Strömungslängsrichtung. Die Kanten der verdrillten Bauteile können auch bereichsweise auf anderen Bauteilen oder den Wandungen der Strömungskanäle örtlich abgestützt auf- bzw. anliegen.

Die Gesamtlänge der umströmbaren Kanten des oder der Trägerelemente entlang eines Strömungspfades kann 25 %, vorzugsweise gleich oder größer 50 % der Länge des Trägerkörpers betragen. Besonders bevorzugt erstrecken sich die Kanten über praktisch die gesamte Länge des Trägerkörpers. Bei Kanten an verdrillten oder gebogenen Bauteilen kann die gesamte Kantenlänge die Länge des Trägerkörpers auch beträchtlich übersteigen.

Die Trägerelemente können als sich in Strömungsrichtung erstreckende Stege ausgebildet sein, die durch Blechfaltungen von Blechabschnitten ausgebildet sind. Die Blechfaltungen können in Form von Ausklinkungen einwandig und/oder in Form von Faltungsstegen doppelwandig ausgebildet sein, wobei im letzeren Fall stabilere Blechabschnitte mit der doppelten oder mehrfachen Blechstärke entstehen. Die Faltungen oder Ausklinkungen können beidseitig an den Blechabschnitten vorgesehen sein, z.B. auch alternierend auf beiden Seiten. Die Stege können an zusätzlich in den Trägerkörper eingebrachten Blechabschnitten vorgesehen sein, die Ausklinkungen bzw. Blechfaltungen können auch an Blechabschnitten vorgesehen sein, aus denen der räumliche Strukturverbund des Trägerkörpers aufgebaut wird.

Sind die mit umströmbaren Kanten versehenen Trägerelemente als stegartige Blechfaltungen ausgeführt, so ist die Breite der Stege, z.B. gemessen an deren Basis oder als Abstand der Wendepunkte bei gekrümmten Stegflanken, vorzugsweise klein gegen die Steghöhe und/oder den Abstand benachbarter Stege, z.B. kleiner einem Verhältnis 1:2, vorzugsweise kleiner 1:5. Die Faltungsschenkel der Stege liegen dabei vorzugsweise aneinander an oder sind z.B. herstellungsbedingt nur geringfügig voneinander beabstandet.

Die Stege sind vorteilhafterweise flach ausgebildet und z.B. durch spitzwinkelige Blechfaltungen erzeugt, so daß deren Breite nur einige wenige Blechstärken beträgt. Der von den Begrenzungsflächen der Stege eingeschlossene Winkel kann weniger als 45°, vorzugsweise weniger als 30° bis vorteilhafterweise praktisch 0° betragen. Sind die Stege als Blechfaltungen ausgeführt, so ist der Flankenabstand der Stege vorzugsweise so gering zu wählen, daβ Beschichtungsmaterial mit üblicher Viskosität und Teilchengröße des gegebenen Anwendungszweckes nicht bzw. nur geringfügig zwischen die Stegflanken eindringt. Bereiche mit schlechtem Medienaustausch bzw. katalytisch unwirksame Materialansammlungen werden so vermieden oder reduziert. Sich an die Stege seitlich anschließende Blechabschnitte sind vorteilhafterweise stumpfwinkelig gegen die Stege abgewinkelt, vorzugsweise um ca. 100° bis 150, insbesondere ca. 120°. Durch die flache Ausführung der Stege wird der freie Strömungsquerschnitt des Trägerkörpers durch die Stirnseiten der Stege praktisch nicht verringert, z.B. um 10% oder weniger, wozu die Stege als Blechfaltungen mit offenen, mediendurch- bzw. seitlich hinterströmbaren Stirnseiten ausgeführt sein können, so daβ sich für das auf einer Seite des Steges oder einer Blechlage strömende Medium ein nur geringer Strömungswiderstand ergibt.

Vorzugsweise sind die Trägerelemente zumindest bereichsweise, besonders vorteilhaft über praktisch die gesamte Länge des Trägerkörpers, vollumfänglich umströmbar und z.B. in Form von freistehenden Stegen, Drähten oder Rohrabschnitten bzw. Rohrteilumfängen oder als Teilbereiche von Streckmetallagen ausgebildet.

Die Höhe bzw. Breite der Stege mit umströmbaren Kanten bzw. Durchmesser der Trägerelemente ist vorzugsweise klein verglichen mit dem Abstand der umströmbaren Kanten und Flächen zueinander und/oder von der Seitenwandung eines Strömungskanals, beispielsweise kann das Verhältnis kleiner 1/2, vorzugsweise kleiner 1/10 bis 1/25 oder weniger betragen.

Die Trägerelemente können als Rohrabschnitte mit einen runden oder eckigen Querschnitt ausgeführt sein oder als Stege einer beliebigen Form, insbesondere mit winkeligem wie rechteckigem, quadratischem, dreieckigem, stumpfwinkeligem Querschnitt oder mit bogenförmigem oder gewelltem Querschnitt, jeweils als Voll- oder Hohlprofil. Die Trägerelemente können die Kontur von Rohrteilumfängen unterschiedlicher Geometrien oder auch zusätzliche Seitenrippen aufweisen und z.B. einen sternförmigen Querschnitt mit 3 bis 5 oder mehr Rippen haben. Stegförmige Trägerelemente können an anderen, z.B. konventionellen Trägerelementen wie Blechen angeordnet sein und von diesen einseitig oder zu mehreren Seiten, insbesondere zu gegenüberliegen Seiten, vorstehen, wobei Stege benachbarter Bauteile fächerartig oder kammartig ineinander eingreifen können.

Vorteilhafterweise sind Trägerelemente mit wendel- bzw. schaufelartig gebogenen Auβenflächen wie z.B. in Form von verdrillten Stegen vorgesehen, die das vorbeiströmende Medium in eine vorzugsweise nur schwache Rotation quer zur Strömungsrichtung versetzen. Die gebogenen Flächen sind vorzugsweise so ausgerichtet, daß diese unter einem spitzen Winkel von dem Medium umströmt werden und das Medium durchwirbeln.

Vorzugsweise ist der Verdrillungsdrehsinn der Umlenkflächen benachbarter Elemente so zueinander gewählt daß die Rotationsbewegung benachbarter umgelenkter Medienstromfäden sich besser vermischend und mehr Turbulenz an den Kanten erzeugend wirkt. Der Verdrillungsdrehsinn benachbarter Umlenkflächen kann insbesondere gegensinnig zueinander sein, was gegenüber einer Anordnung mit gleichsinnigem Drehsinn, bei der eine geringere Reibnug an den Scherflächen der Stromfäden der resultiert, vorteilhaft ist.

Die Anordnung der Trägerlemente ist auf vielfältige Weise möglich, insbesondere sind Kombinationen von Trägerelementen unterschiedlicher Ausführungsform vielfältig möglich, z.B. in Form von Streckmetallagen oder profilierten Stegen kombiniert mit Drähten und/oder Kombinationen von unterschiedlich profilierten Stegen. Die Trägerelemente verlaufen vorzugsweise jeweils parallel zueinander, können jedoch auch jeweils einen Winkel zueinander einschließen. Die umströmbaren Kanten können jeweils auch von konkaven Flächen wie z.B. kreisrunden Kanalwänden teilweise oder vollständig umgeben sein, die jeweils von Trägerelementen mit oder ohne umströmbare Kanten gebildet werden können. Hierdurch kann insbesondere bei der erforderlichen Stabilität des Trägerkörpers die Flächengröße zum Turbulenzgrad der Strömung optimiert werden.

Die Trägerelemente können gleichmäßig über den Querschnitt des Trägerkörpers verteilt sein, vorzugsweise in einem quadratischen oder hexagonalen Raster, sie können auch unregelmäßig oder statistisch verteilt sein. Stegförmige Trägerelemente, die stern- oder wannenförmig profiliert sein können, sind dabei vorteilhafterweise so angeordnet, wie es einem Ausschnitt aus einem Trägerkörper mit einer gegebenen Anordnung von Strömungskanälen, insbesondere einer dichtesten Packung von runden oder quadratischen Röhren, entsprechen würde, wobei die Lage der Trägerelemente insbesondere den Stoβlinien aneinandergrenzender Kanäle oder den mittig zwischen Stoßlinien angeordneten Wandbereichen der Strömungskanäle entsprechen kann. Die Ausrichtung und Anzahl der Stege an den Trägerelementen kann dabei der der angrenzenden Wandungsbereiche der korrespondierenden Kanalstruktur entsprechen oder von dieser abweichen, z.B. gegenüber dieser verdreht sein. So können dreisternige Profilstege in hexagonal dichtester Anordnung vorgesehen sein, deren Rippen jeweils einen Winkel von 120° einschließen, wobei die Rippen benachbarter Profilstege zueinander auf Lücke angeordnet sind. Es können auch gestapelte Reihen rinnenförmiger Stege vorgesehen sein, wobei bei benachbarten Stapeln die offene Seite der Rinnen jeweils entgegengesetzt ausgerichtet ist. In Zwischenräumen zwischen den Profilstegen können andere Trägerelemente mit umströmbaren Kanten wie z.B. Drähte angeordnet sein. Dies gilt jeweils sowohl für Anordnungen der Trägerelemente in Strömungskanälen als auch in offenen Trägerkörpern mit einem Medienplenum.

Die Trägerelemente erstrecken sich vorzugsweise parallel zur Längsrichtung des Trägerkörpers, sie können jedoch auch abschnittsweise oder über ihre gesamte Länge zu dieser Richtung geneigt, insbesondere unter spitzem Winkel, verlaufen.

Nach einer bevorzugten Ausführungsform sind die Trägerelemente in Strömungskanälen angeordnet, die einen Medienaustausch quer zu den Strömungspfaden begrenzen, wobei die umströmbaren Kanten in die Strömungskanäle hineinragen. Hierbei kann ein gewisser Medienaustausch quer zu den Strömungspfaden durch in den Strömungskanalwandungen eingebrachte Durchtrittsöffnungen möglich sein. Die Trägerelemente können jeweils annähernd im Zentrum der Strömungskanäle angeordnet sein und miteinander zu zweidimensionalen Lagen z.B. in Form von Drahtgittern oder Streckmetallagen verbunden sein.

Die Trägerelemente mit umströmbaren Kanten können zumindest teilweise oder vollständig in Strömungskanälen angeordnet sein, die einen Fluidaustausch quer zur Trägerkörperlängsrichtung weitestgehend oder vollständig verhindern.

Nach einer weiteren vorteilhaften Ausführungsform sind mehrere seitlich voneinander beabstandete Trägerelemente in einem Strömungskanal angeordnet, die vorzugsweise gleichmäßig voneinander und von der Kanalwandung beabstandet sind, wobei der Abstand der Trägerelemente voneinander etwa dem Abstand der Trägerelemente zur Kanalwandung entsprechen kann.

Des weiteren können vorteilhafterweise die umströmbaren Kanten bzw. vollumfänglich umströmbaren Profile in einem Bereich des Trägerköpers angeordnet sein, der in einer Raumrichtung, vorzugsweise in zwei eine Ebene aufspannenden Raumrichtungen, im wesentlichen fluiddurchlässig ist, wobei vorzugsweise ein im wesentlichen ungehinderter Fluidaustausch ermöglicht wird. Die Erstreckung des fluiddurchlässigen Bereichs quer zur Längsrichtung des Wabenkörpers beträgt vorzugsweise in einer oder beiden Raumrichtungen ein Vielfaches des Blechlagenabstandes bzw. Abstandes der umströmbaren Kanten bzw. Profile, z.B. das 2 oder 3-5 fache der jeweiligen Abstände oder mehr, bis zur halben oder ganzen Breite des Trägerkörpers in dieser Richtung. Vorzugsweise ist über diesen Abstand quer zur Trägerköperlängsrichtung im wesentlichen keine einen Fluidaustausch verhindernde Einschnürung der Strömungskanäle gegeben, d.h. keine Einschnürung, die mehr als 25% oder 50% des Blechlagen- bzw. Kantenabstandes benachbarter umströmbarer Kanten oder vollumfänglich umströmbarer Profile entspricht.

Die mit den erfindungsgemäßen Trägerelementen versehenen Strömungskanäle können einen - annähernd - isogonen Querschnitt mit z.B. runder, dreieckiger, quadratischer, sechseckiger oder sinusförmiger Form aufweisen, der einen eingeschriebenen Kreis umschließt, wobei die Trägerelemente in Bündeln aus zwei, drei, vier oder mehr Profilen mit gleichem oder unterschiedlichen Querschnitten angeordnet sein können. Hierdurch können auch größere oder geometrisch ungünstige Kanalquerschnitte eingesetzt werden, da durch die erfindungsgemäßen Trägerelemente günstige Diffusionsverhältnisse flexibel einstellbar sind. Bei Trägerelementen mit seitlich vorstehenden Rippen bzw. Stegen mit umströmbaren Kanten weisen diese vorteilhafterweise in Richtung auf die Kanalwandmitten oder auf Stoßlinien von Kanalwänden, die einen Winkel einschließen.

Vorteilhafterweise sind die Trägerelemente in nicht isogonen, spaltförmigen Strömungskanälen angeordnet, deren Ausdehnung in einer Querrichtung groß ist gegenüber der Ausdehnung in einer dazu senkrechten Querrichtung, z.B. größer als der Faktor 3 oder 5, und sich vorzugsweise in einer Richtung über den gesamten Querschnitt des Trägerkörpers erstrecken.

Der Abstand der umströmbaren Kanten zu den Kanalwandungen bzw. zu benachbarten umströmbaren Kanten kann von einem Teil, z.B. einem Viertel oder weniger, bis zum Vielfachen des umschreibenden Durchmessers bzw. der Breite der Trägerelemente betragen.

Die Trägerkörperstruktur kann insbesondere derart ausgebildet sein, daß die Nusselt-Zahl als Vergleichsmaβstab auf einen bestimmten Massenstrom bezogen, wie er z.B. typisch bei Automobilanwendungen ist, für einen Bereich des Trägerkörpers von > 10 Volumenprozent, vorzugsweise > 25, besonders bevorzugt > 50%, > 4,5, vorzugsweise > 6 ist. Die angegebenen Werte beziehen sich bei diesen Relationen auf einen Diffusionsabstand von 0,5 mm, der beispielsweise bei Strömungskanälen mit kreisförmigem Querschnitt dem Radius entspricht. Insbesondere können bei Kanälen großen Querschnitts mit parallel zur Strömungsrichtung verlaufenden voll umfänglich umströmbaren Trägerprofilen für katalytisch aktives Material, die umströmbare Kanten aufweisen können, ohne weiteres Nusselt-Zahlen von 15 erzielt werden. Insbesondere kann der Trägerkörper derart ausgebildet sein, daß für ihn im Mittel eine Nusselt-Zahl von > 4,5, vorzugsweise > 6 resultiert. Zum Vergleich sei angeführt, daβ für spaltförmige Kanäle, die sich über die Breite des Trägerkörpers erstrecken, die Nusselt-Zahl ca. 8 beträgt.

Die Kanalquerschnitte der erfindungsgemäß ausgebildeten Kanäle können derart angeordnet sein, daβ sie sich über Querschnittsbereiche des Trägerkörpers erstrecken, bei welchen in der Startphase des Katalysatorbetriebs Temperaturunterschiede von mehr als 10°C, vorzugsweise mehr als 50°C bestehen. Insbesondere können sich die Kanäle ausgehend von den Außenseiten des Trägerkörpers, die bei einer Startphase am kältesten sind, über 25%, vorzugsweise über die Hälfte des Trägerkörperquerschnitts in Richtung auf die Mittelachse bzw. -ebene desselben erstrecken. In diesen Bereichen können Katalysatorträgerelemente mit umströmbaren Kanten, insbesondere vollumfänglich umströmbare Trägerelemente vorgesehen seien.

Aufgrund der großen Breite der Strömungskanäle kann die Katalysatorbeschichtung eine höhere Dicke aufweisen als bei herkömmlichen Trägerkörpern. So kann bei einer Blechdicke von ca. 5/100 mm die Beschichtungsdicke 5-25/100 mm oder mehr betragen, entsprechend einem Verhältnis von Beschichtungsdicke zu Blechdicke von 1-5 oder mehr. Bei besonderen Anwendungen kann das Verhältnis auch >10 betragen. Hierdurch wird die Empfindlichkeit des Katalysators auf Katalysatorgifte deutlich vermindert.

Zur Erhöhung der Stabilität des Trägerkörpers und damit auch dessen Temperaturwechselbeständigkeit sowie zur Beabstandung können die erfindungsgemäßen Trägerelemente untereinander über sich quer zu diesen erstreckenden Verbindungselementen verbunden, die zugleich eine Stützfunktion übernehmen und auch strebenförmig ausgebildet sein können. Die Materialstärke diser zusätzlichen Versteifungs- bzw. Verbindungselemente ist vorzugsweise größer oder gleich derjenigen der Trägerelemente, sie kann jedoch auch unterhalb dieser liegen. Durch die Verbindungselemente, kann das Schwingungsverhalten der Trägerelemente beeinflußt werden, was sowohl bei sich ändernden Strömungsverhältnissen als auch bei von außen aufgezwungenen Schwingungen auf den Trägerkörper von Bedeutung ist. Die genannten Elemente können die Trägerelemente formschlüssig stützen und einstückig mit diesen verbunden oder stoffschlüssig angefügt sein.

Zusätzlich oder alternativ zu den Verbindungselementen, die lagenweise angeordnet sein können, können Versteifungselemente vorgesehen sein, die sich senkrecht und/oder parallel zu den erfindungsgemäßen Trägerelementen erstrecken und die zugaufnehmend an einem den Trägerkörper aufnehmendem Gehäuse und/oder Strukturbereichen des Trägerkörpers mit erhöhter Steifigkeit wie z.B. Zwischenwänden und/oder Blechlagen befestigt sein können. Bereiche erhöhter Steifigkeit können in den Trägerkörper insbesondere durch Mehrfachfaltung von Blechabschnitten oder durch kraftaufnehmende Verbindungen von Blechabschnitten oder anderen Strukturelementen des Trägerkörpers miteinander erzeugt werden, z.B. durch Verbindung von Faltungsschenkeln unterschiedlicher den Trägerkörper aufbauender Blechlagen. Die Trägerelemente können auch durch Biegung oder Wendelung erzeugte örtliche Abstützungen an den Kanalwänden aufweisen.

Die Verbindungs- bzw. Versteifungselemente sind vorteilhafterweise an Kraftangriffs- bzw. Lastabtragungszonen des Trägerkörpers zum Gehäuse oder zu entsprechenden Zwischen- und/oder Außenwänden des Trägerkörpers angeordnet, wobei die Zonen als Ebenen ausgeführt sein können.

Die Trägerelemente mit umströmbaren Kanten können mittels der Verbindungselemente und/oder der Versteifungselemente zu Strukturverbänden zusammengefügt werden, die sich innerhalb des Trägerkörpers über einen größeren Querschnittsbereich desselben oder zumindest in einer Richtung über den gesamten Querschnitt des Trägerkörpers erstrecken, vorzugsweise als ein zusammenhängender Strukturverband. Die entsprechenden Strukturverbände, die einen isometrischen oder langgestreckten Querschnitt aufweisen können, können durch Bereiche des Trägerkörpers mit erhöhter Dehnfähigkeit bzw. verringerter Steifigkeit getrennt sein, wodurch insgesamt die Steifigkeit und damit auch die Temperaturwechselbeständigkeit sowie die Schwingungseigenschaften des Trägerkörpers an die jeweiligen Anforderungen anpaßbar sind. Die Dehnungszonen können den Trägerkörper insbesondere quer zu den Strömungspfaden unterteilen. Die Ausdehnung der untereinander zu einem Strukturverband verbundenen Trägerelemente quer zu den Strömungspfaden beträgt vorteilhafterweise ein Vielfaches des Abstandes benachbarter Trägerelemente.

Die jeweiligen Verbindungs- bzw. Versteifungselemente können die erfindungsgemäβen Trägerelemente lose unterstützen, an diesen durch geeignete Fügetechniken befestigt sein, insbesondere durch Kraftschluß, Formschluß oder durch Stoffschluß, wobei bereits eine zugaufnehmende Verbindung der Elemente durch Aufbringung des Beschichtungsmaterials oder durch einstückige Anformung der Elemente aneinander erfolgen kann. Auch der Einsatz verdrillter drahtförmiger Trägerelemente ist hierzu geeignet.

Die Verbindungselemente und/oder die Versteifungselemente können beispielsweise in Form von Drähten, Stegen, Bändern oder plattenförmigen glatten oder profilierten Blechabschnitten ausgebildet sein. Insbesondere können die erfindungsgemäβen Trägerelemente sowie die Verbindungs- bzw. Versteifungselemente in Form von Streckmetallagen ausgebildet sein, wodurch ein integriertes Bauelement zur Erzeugung der Trägerkörper vorliegt. Bei den Streckmetallagen im Sinne der Erfindung können die durch Einschnitte in die Blechlagen erzeugten Abschnitte parallel und/oder senkrecht zu den Blechlagen verschoben und gegebenenfalls anschließend unter Umformung, insbesondere Stauchung, die gewünschten Profile erzeugt werden. Die Einschnitte können z.B. parallel zueinander in ebene oder strukturierte, z.B. wellenförmig oder zick-zack-förmig gefaltete Blechlagen eingebracht werden, wobei vielfältige Trägerstrukturen als z.B. ein- oder mehrwandige strukturierte Wände, stegförmige Trägerelemente oder strukturierte Profile erzeugbar sind.

Die Trägerelemente, insbesondere in Form von Streckmetallagen oder Blechlagen mit integrierten Faltungsstegen, können auf benachbarten Blechlagen abgestützt oder von diesen beabstandet sein, wobei die jeweiligen Lägen durch sich senkrecht oder parallel erstreckende Versteifungselemente stabilisiert sein können, die gegebenenfalls mit den erfindungsgemäßen Trägerelementen mittelbar oder unmittelbar verbunden sind. Hierzu können die Streckmetall- bzw. Blechlagen auch Bereiche unterschiedlicher Höhe, Biegung oder Tordierung aufweisen, so daβ die benachbarten Blechlagen sich stellenweise an den Streckmetallagen abstützen und stellenweise von diesen beabstandete und umströmbare Kanten aufweisen.

Vorteilhafterweise sind die erfindungsgemäßen Trägerelemente stirnseitig miteinander verbunden, insbesondere solche Trägerelemente, die auf unterschiedlichen Höhen des Trägerkörpers in eingebautem Zustand angeordnet sind. Gemäß einer besonders bevorzugten Ausgestaltung des Trägerkörpers wird hierzu ein Streckmetall eingesetzt, in dem die entsprechenden Trägerelemente ausgebildet sind, wobei das Streckmetall mäanderförmig abgelegt wird.

Zum Aufbau des Trägerkörpers können lagenweise auch Trägerelemente mit umströmbaren Kanten zwischen ebenen oder strukturierten durchgehenden Blechlagen angeordnet werden, wobei die Blechlagen von den Trägerelementen beidseitig beabstandet sind oder ein- oder beidseitig auf den Trägerelementen aufliegen. Die Trägerelemente können hierbei als zusammenhängende Profile ausgeführt sein.

Zur Herstellung eines Katalysators kann der vorgefertigte Trägerkörper mit der katalytisch aktiven Beschichtung, die die Beschichtung mit einem Substratmaterial einschließt, in vorgefertigtem Zustand versehen werden, es können auch jeweils zuvor beschichtete Trägerelemente zu einem Trägerkörper zusammengefügt werden.

Die einzelnen Lagen von Trägerelementen bzw. Blechlagen, aus denen der Trägerkörper aufgebaut wird, können kongruent oder seitlich oder in Längsrichtung versetzt zueinander angeordnet sein.

Durch den Einsatz von Trägerelementen für das katalytisch wirksame Beschichtungsmaterial mit umströmbaren Kanten können Trägerkörper aufgebaut werden, die über größere Volumenbereiche eine sehr offene Struktur mit einer Vielzahl von nebeneinander angeordneten Trägerelementen ohne einen Gasaustausch quer zu den Strömungspfaden verhindernde Trennwände in einem gemeinsamen Gasplenum aufweisen. Hierdurch wird eine Vergleichmäßigung der Geschwindigkeits- bzw. Temperaturverteilung sowie der stofflichen Zusammensetzung des fluiden Mediums ermöglicht und/oder ein Trägerkörper mit geringerem Volumen bei gleicher Effektivität erhalten. Der gemeinsame Durchströmungsraum wird nach außen durch die Gehäusewand oder durch Trenn- bzw. Versteifungswände des Trägerköpers, die auch innerhalb desselben angeordnet sein können, umschlossen. Die Volumenbereiche mit Glasplenum erstrecken sich vorteilhafterweise in zwei im wesentlichen senkrecht zueinander stehenden Richtungen quer zu den Strömungspfaden und schließen in einer oder in beiden Richtung eine Vielzahl (d.h. drei oder mehr) von umströmbaren Kanten ein. Die frei durchströmbaren Strukturbereiche können in Längs- und/oder in Querrichtung des Trägerkörpers mit Bereichen abwechseln, bei denen das fluide Medium in Strömungskanälen mit seitlichen Wandungen geführt wird. Das Volumen der offenen Strukturbereiche gegenüber dem der Bereiche ohne umströmbare Kanten bzw. mit einen Medienaustausch verhindernden Seitenwänden kann so bemessen sein, daß der Anteil der katalytischen Gesamteffektivität der offenen Strukturbereiche am Trägerkörper nicht vernachlässigbar, z.B. 5 - 25% oder mehr der Gesamteffektivität ausmacht, vorzugsweise mehr als 50% bis 100% der Gesamteffektivität. Insbesondere können die offenen Strukturbereiche Volumina einnehmen, die jeweils für sich oder in ihrer Gesamtheit die Einzel- oder Gesamtvolumina von Bereichen des Trägerkörpers übersteigen, die durchströmbare Kanäle oder keine umströmbaren Kanten aufweisen. Die offene Struktur der erfindungsgemäßen Trägerelemente kann sich insbesondere auch über den gesamten Trägerkörper erstrecken bzw. im in Strömungsrichtung vorderen Bereich des Trägerkörpers angeordnet sein, so daß durch einen verlängerten Strömungsweg des Mediums bei verringerter Strukturmasse eine vergrößerte Aufheizgeschwingigkeit des Trägerkörpers und damit ein verbessertes Startverhalten des Katalysators resultiert. Außer den hier beschriebenen Trägerkörperbereiche mit offener Struktur können in einem Gehäuse, insbesondere in demselben Trägerkörper, in Strömungsrichtung und/oder in einer Richtung quer dazu Trägerkörperbereiche anderer Struktur vorgesehen sein, insbesondere solche mit unterschiedlicher Anzahl oder Form von Trägerelementen und/oder unterschiedlichem Kanalquerschnitt bzw. Seitenwandabstand. Die können jeweils auch als Befestigungsbereiche für die Tägerelemente dienen, die in den offenen Trägerkörperbereichen angeordnet sind, und z.B. die offenen Bereiche an beiden Stirnseiten begrenzen.

Vorzugsweise sind die Trägerelemente mit umströmbaren Kanten relativ zueinander derart angeordnet, daß einer umströmten Trägerkörperaußenfläche in Richtung der Flächennormalen die nächstbenachbarte Trägerkörperaußenfläche einen vorgegebenen Mindestabstand, z.B. den 1,5 fachen, vorzugsweise mehr als den 2-fachen Abstand der kürzesten Entfernung von Trägerkörperflächen benachbarter Trägerelemente aufweist. Der Abstand kann sich sowohl auf einander gegenüberliegende Flächenbereiche als auch auf gegenüberliegende Kanten und Flächen beziehen. Die innerhalb des vorgegebenen Mindestabstands angeordneten benachbarten Trägerkörperflächen sind vorzugsweise derart orientiert, daß die Flächennormalen einen Winkelbetrag von mehr als 90°, vorzugsweise mehr als 120° einschließen. Durch diese Anordnung sind gleichzeitig die Schwerpunktachsen der Trägerelemente in Richtung der Trägerkörperhöhe versetzt zu den Mittellängsachsen der Strömungspfade mit höchster Strömungsgeschwindigkeit, die den Druckmittelpunkten entsprechen, angeordnet. Hierdurch wird erreicht, daß sich an den Trägerkörperflächen aufgrund der Gasreibung ausbildende Wirbel nicht jeweils einem Gegenwirbel entgegengesetzten Drehsims an einer Trägerkörperoberfläche gegenüberliegen, wobei die Flächen einen vorgegebenen Mindestabstand einhalten. Hierdurch liegt eine Trägerkörperstruktur mit besonders hohen Konversionsraten vor.

Zur Anpassung an bestimmte Anforderungen kann der Trägerkörper mehrere von den Stirnseiten und damit auch den Ein- und/oder Ausströmbereichen in Strömungsrichtung beabstandete Bereiche aufweisen, die sich in lateraler Richtung über jeweils ein oder mehrere Trägerelemente erstrecken, wobei zumindest zwei dieser Bereiche eine unterschiedliche Strukturierung aufweisen. Die Strukturbereiche können insbesondere spaltförmige Kanäle aufweisen oder jeweils in zwei Richtungen quer zu den Strömungspfaden mediendurchlässig ausgeführt sein, z.B. in Form offener Trägerkörperstrukturen mit Gasplenum. Diese Bereiche können jeweils in Strömungsrichtung hintereinander angeordnet sein. Die Strukturierung, die sich auf die Anordnung, die Kantenverlaufsrichtung und/oder Verbindung der Trägerelemente und anderer Bauelemente wie Versteifungselemente bzw. Verbindungselemenete beziehen kann, kann insbesondere unterschiedliche Dehnungseigenschaften und/oder Strömungswiderstände bzw. Strömungsweglängen quer und/oder längs zu den Strömungspfaden bewirken.

Eine besonders vorteilhafte Ausbildung eines Trägerkörpers liegt vor, wenn in diesem mehrere Durchmischungszonen (einschließlich Ein- bzw. Ausströmzone), in denen vorwiegend eine Durchmischung stattfindet, mit mehreren Reaktionszonen, in denen vorwiegend eine Reaktion erfolgt, abwechseln. Der Trägerkörper weist somit vorzugsweise mindestens zwei oder mehr, beispielsweise 10 oder mehr, Reaktionszonen auf, die durch Durchmischungszonen getrennt sind. Der Trägerkörper kann hierbei auch durch mehrere Einzelkörper zusammengesteckt sein, die jeweils in die Stirnseiten eines benachbarten Trägerkörpers eingreifen und so einen zusammenhängenden Strömungsraum ergeben. Das Verhältnis der Summe der Längen der Reaktionszonen zu der Summe der Längen der Durchmischungszonen beträgt >2, vorzugsweise 5-20 oder mehr. Die Länge der vergleichsweise kurzen Durchmischungszonen kann dabei dem 2-20fachen der Spaltweite bzw. -höhe der Strömungskanäle betragen. Die Durchmischungszone sowie auch die Einströmzone sind dadurch charakterisiert, daß bei diesen Stauwirbel entstehen und somit der Strömungswiderstand wesentlich durch den Formwiderstand bestimmt wird und eine weitläufige Umlenkung der Strömungsfäden aufgrund von Strömungshindernissen gegeben ist. Hierzu können im Strömungsquerschnitt beispielsweise schräg zur Strömungsrichtung verlaufende Profile wie Stege von Streckmetalllagen, Einströmleitpröfile, Drähte oder dergleichen vorgesehen sein, deren Anströmflächen in einem Winkel von >15°, vorzugsweise 45 - 90° zur Strömungsrichtung verlaufen. Ein hoher Formwiderstand wird aber auch durch eine Kanalstruktur des Trägerkörpers im Einströmbereich aufgrund des schroffen Übergangs von turbulenter zu laminarer Strämung und der sich ausbildenden Stauwirbel erzeugt, und zwar sowohl bei schräger Anströmung des Trägerkörpers als auch bei Anströmung in Längsrichtung desselben, ohne daβ hierzu Strömungsumlenkbleche oder dergleichen vorzusehen sind. Demgegenüber zeichnen sich die Reaktionszonen durch einen hohen Reibkraftanteil des Strömungswiderstands aus, so daß hier Micro-Wirbelungszonen vorliegen. Die Trägerelemente verlaufen in diesen Zonen vorzugsweise parallel oder bis zu einem Winkel von ca. 10° zur Strömungslängsrichtung.

Ein schroffer Übergang im Einströmbereich würde zu überhöhten Einströmdrosselverlusten und dadurch zu einem Verlust an passivem Aufheizvermögen aus dem Wärme- und Strömungsenergieinhalt des Fluidstroms führen, der für eine effektive Aufheizung der Einströmzone verloren geht. Somit sind vorteilhafterweise Mittel zur Verringerung des Wärmeübergangswiderstandes in der Einströmzone vorgesehen, z.B. in einer verlängerten Einströmzone in Form von axial gestreckten Formumlenkungen, durch geometrische Aufwinkelung der Strömungseintritte und/oder durch dort quer verlaufende Zusatzelemente wie Drähte oder dgl, die vorteilhafterweise schon vor Beginn der Strömungskanäle angeordnet sind. Hierdurch wird das Produkt aus Flächenanteilen und Wärmeübergangsbeiwerten verringert. Hierdurch wird das katalytisch wirksame Material im Einströmbereich in der Aufheizkaskade aus Abgaswärmeeinkoppelung und exothermer chemischer Reaktion besser nutzbar und die Konversion im Anfahrbetrieb schneller wirksam, da der Wärmeübergang axial tiefer in die Einströmzone hinein genutzt werden kann.

Insgesamt gesehen kann das Verhältnis der Formwiderstände der Durchmischungszone zu den Reibkraftwiderständen der Reaktionszone 2,5 oder mehr betragen, d.h. der Druckverlust in der Durchmischungszone bezogen auf eine Einheitslänge beträgt das 2,5- oder Mehrfache des Druckverlusts unter den gegebenen Strömungsverhältnissen in der Reaktionszone. Hierdurch ist insgesamt ein Trägerkörper mit mehreren Zonen deutlich unterschiedlicher Funktion geschaffen, wobei in den Eintrittssowie den Durchmischungszonen eine starke Quervermischung aufgrund beschleunigter Strömungen und Wirbelbildung erfolgt, wobei in den Reaktionszonen aufgrund Haftreibung verstärkt Micro- bzw. Scherwirbel auftreten.

Bei einem mit einem Gehäuse versehenen Trägerkörper kann das Gehäuse derart ausgeführt sein, daß es ausgehend von dem stromaufwärts liegenden Ende des Trägerkörpers auf einer oder mehreren Seiten seitlich von diesem beabstandet ist, so daß das fluide Medium nicht nur stirnseitig sondern auch seitlich in den Trägerkörper einströmen kann. Um ein vollständiges seitliches Vorbeiströmen an dem Trägerkörper zu verhindern, können geeignet angeordnete Umlenkbleche vorgesehen sein, die ab einem vorgegebenen stirnseitigen Abstand ein seitliches Einströmen des fluiden Mediums in den Trägerkörper gewährleisten. Insbesondere dann, wenn das Gehäuse mit einem Eintrittsstutzen versehen ist, dessen Querschnitt kleiner als der Trägerkörperquerschnitt ist, kann durch diese Maßnahmen eine gleichmäßigere Geschwindigkeitsverteilung erzielt werden. Vorteilhafterweise ist an einer derartigen Anordnung eines Trägerkörpers ein Trägerkörper mit spalt- bzw. röhrenförmigen Strömungskanälen nachgeschaltet, der einen verengten Strömungsquerschnitt aufweist, dem gegebenenfalls wiederum ein einen seitlichen Medienein- bzw. austritt ermöglichender Trägerkörper nachgeschaltet ist.

Die Erfindung wird nachfolgend beispielhaft erläutert und anhand der Figuren beispielhaft beschrieben.

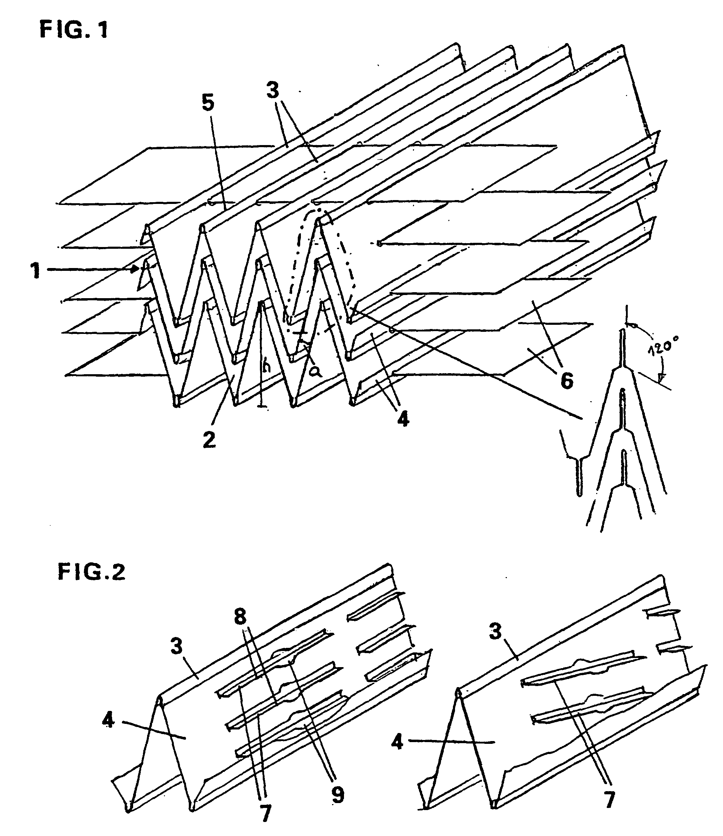

Figur 1 zeigt einen Ausschnitt eines Trägerkörpers, der aus einzelnen kongruent zueinander abgelegten Blechlagen 1 aufgebaut ist, wobei die Höhe h der Blechlagen wesentlich größer ist als der Abstand a der Blechlagen zueinander. Zwischen den Blechlagen werden zick-zack-förmige und sich über die gesamte Breite des Trägerkörpers erstreckende Strömungskanäle 2 eingeschlossen. Die Blechlagen 1 weisen an den Faltungsstellen Faltungsrippen 3 auf, die sich parallel zur Strömungsrichtung eines durch den Trägerkörper geführten fluiden Mediums erstrecken und deren Flanken steiler angestellt sind als die angrenzenden Bereiche der Faltungsstege 4 der Blechlagen, so daß die mittleren freien Kanten 5 der Faltungsrippen 3 in die Strömungskanäle 2 hineinragen. Wie in Figur 1, rechts, im Detail gezeigt, schließen die Flanken der Faltungsrippen 3 mit den angrenzenden Bereichen der Faltungsstege 4 einen Winkel von 120° ein, wobei die weiter entfernten Bereiche der Faltungsstege stärker gegenüber den Rippen 3 abgewinkelt sind. Es sei hier betont, daß die sich längs der Strömungskanäle erstreckenden und umströmbaren Kanten bereits auch durch die Faltungskanten der zick-zack-förmigen Blechlagen 1 ausgebildet sein können, die dann jeweils die Strömungskanäle auf Höhe der Faltungsstege 4 begrenzen.

Zur Stabilisierung des Trägerkörpers sind Versteifungselemente in Form von Bändern 6 vorgesehen, die die Blechlagen jeweils unmittelbar unterhalb bzw. oberhalb der Faltungsrippen 3 sowie mittig in den Faltungsschenkeln 4 durchstoßen. Eine zugaufnehmende Befestigung der Bänder 6 an den Blechlagen 1 erfolgt durch die Beschichtung mit einem Katalysatormaterial bis zu einer den Durchmesser der Blechdurchführungen übersteigenden Stärke. Die freien Enden der Bänder 6 können jeweils an einem Gehäuse festgelegt werden, wozu insbesondere die Enden der Bänder 6 umgefaltet und die Faltungsstege miteinander verbunden werden, wobei die resultierende Seitenwand mit ihren Endbereichen an einem Gehäuse befestigt werden kann.

Gemäß Figur 2 können zusätzlich oder auch alternativ zu den doppelwandigen Faltungsrippen 3 die Faltungsstege 4 der Blechlagen mit ausgeklinkten einwandigen Stegen 7 versehen sein, die sich in Längsrichtung der Strömungskanäle erstrecken, so daß die freien Kanten 8 der Stege 7 von einem durch die Krümmungskanäle geführten Fluid umströmbar sind. Die Stege 7 sind dabei in Reihen angeordnet und fluchtend zueinander ausgerichtet, sie können wie in Figur 2, rechts, gezeigt aber auch geneigt zur Längsrichtung der Strömungskanäle verlaufen, so daß bei gleichsinniger Ausrichtung eine Verlängerung des Strömungsweges und eine zwangsweise Strömungslenkung über den Wabenquerschnitt erfolgen kann. Die Stege 7 sind mittig mit Auskragungen 9 versehen, die sich an der benachbarten Blechlage abstützen, wodurch der Lagenaufbau insgesamt und die Position der ungefähr in der Mitte der Strömungskanäle angeordneten Kanten 8 stabilisiert werden. An benachbarten Abschnitten benchbarter Blechlagen können auch jeweils auf die gegenüberliegende Blechlage weisende Stege vorgesehen sein, die kammartig ineinandergreifen.

Der Abstand der Stege 7 in Längsrichtung der Strömungskanäle ist klein gegenüber der Steglänge, so daß die Stege 7 sich insgesamt über den größten Teil der Länge der Strömungskanäle erstrecken. Dadurch, daß an den Faltungsstegen jeweils mehrere Stege 7 übereinander vorgesehen sind, wird eine katalytisch besonders aktive Anordnung geschaffen.

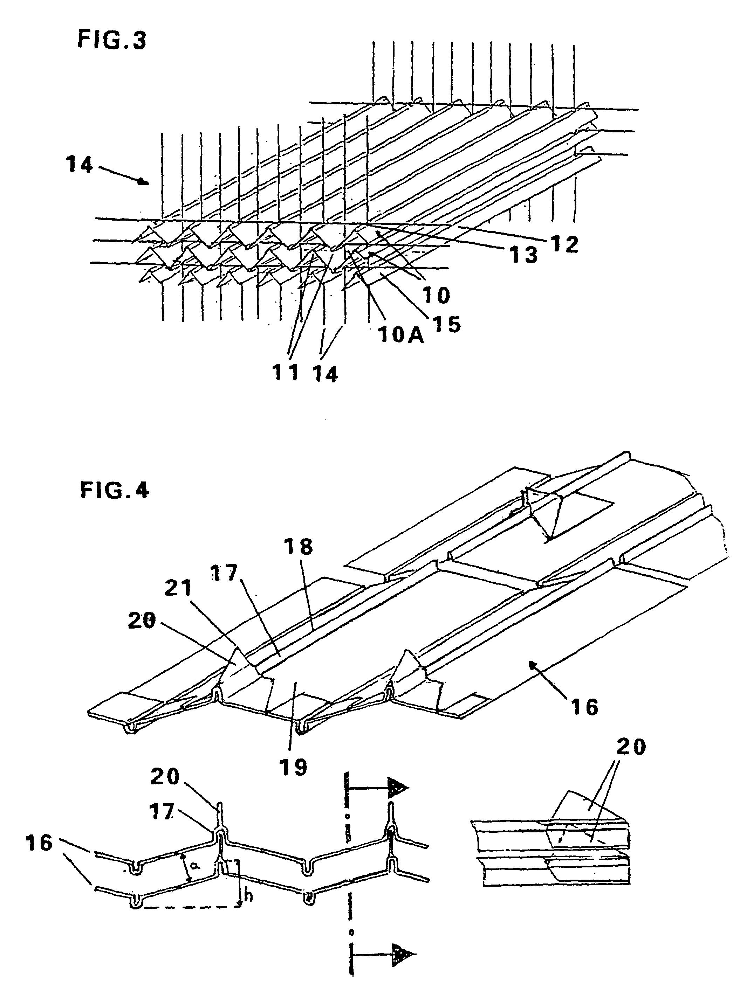

Figur 3 zeigt einen Ausschnitt aus einem Trägerkörper mit einer Anordnung von Blechlagen 10 mit ins Innere der Strömungskanäle 10a hineinragend Faltungsrippen 11, entsprechend der Anordnung gemäß Figur 1. Im Gegensatz hierzu entspricht jedoch die Höhe der Blechlagen in etwa dem Abstand derselben. Zur Stabilisierung der Wabenstruktur sind Versteifungsdrähte 12 vorgesehen, die in Einbuchtungen 13 der Faltungsrippen 11 jeweils beider benachbarter Blechlagen 10 eingelegt sind, wodurch der Abstand der Blechlagen zueinander definiert und eine Längsverschiebung derselben zueinander verhindert wird. Gleichzeitig sind Versteifungsdrähte 14 vorgesehen, die auf Höhe der Einbuchtungen 13 die Blechlagen 10 durchstoßen, so daß eine Verschiebung der Blechlagenfaltung bzw. Faltungsrippen seitlich zueinander beschränkt wird. Durch Verdrillung der Versteifungsdrähte 12, 14 oder durch Beschichtung derselben können diese zugaufnehmend miteinander sowie mit den Blechlagen 10 verbunden werden. Die Versteifungsdrähte 12, 14 sind jeweils im Ein- bzw. Ausströmbereich des Trägerkörpers, in dem ein eher turbulenter Strömungszustand des fluiden Mediums vorliegt, angeordnet, wodurch die Ein- und Ausströmbereiche, auf die verstärkt Strömungskräfte wirken, besonders stabilisiert werden. Die Versteifungsdrähte können jeweils auch innerhalb des Trägerkörpers in Lastdurchleitungs- bzw. Lastabtragungsebenen vorgesehen sein.

Aus Figur 3 ergibt sich des weiteren, daß durch die Höhe des Durchstoβungspunktes der Versteifungselemente an den Faltungsstegen 15 der Blechlagen 10 der Abstand derselben zueinander und damit die Höhe der Strömungskanäle einstellbar ist. Hierzu können auch die zickzackförmigen Blechlagen seitlich zusammengeschoben werden.

Figur 4 zeigt einen Ausschnitt aus einer Blechlage 16 mit Faltungsrippen 17, deren umströmbare Oberkante 18 annähernd in der Mitte des zwischen gegenüberliegenden Blechlagen eingeschlossenen Strömungskanals angeordnet ist. Die Blechlagen werden hierbei durch aus den Faltungsstegen 19 ausgeklinkte Laschen 20 stabilisiert, die hier beidseitig der Faltungsrippen 17 ausgeklinkt sind und sich oberhalb derselben gegeneinander abstützen sowie mit ihrem freien Ende 21 in der Faltungsrippe der darüber angeordneten Blechlage festgelegt sind. Die Festlegung kann dabei durch Einklemmen, Beschichtung oder durch einen Formschluß, z.B. durch einen durch die Versteifungsrippe sowie das freie Ende 21 der Lasche 20 durchgeführten Versteifungsdraht erfolgen. Die Stirnkanten der Bleche 16, insbesondere auf Höhe der Faltungsrippen 17, sowie die Laschen 20 sind doppelwandig verstärkt.

Durch die Verbindung der Laschen 21 mit der darüberliegenden Blechlage werden somit eindimensionäle bzw. isolierte Fügestellen zur Stabilisierung des Katalysatorträgerkörpers ausgebildet. Die Fügestellen können, wie in Figur 4 angedeutet, jeweils übereinanderliegend angeordnet sein, so daß eindimensionale, sich über die gesamte Höhe des Trägerkörpers erstrekkende Versteifungszonen resultieren. Die einzelnen Fügestellen eines sich über die Höhe des Trägerkörpers erstreckenden Bereichs können aber gegebenenfalls auch nur an jeder zweiten oder dritten Blechlage vorgesehen sein, wodurch die Steifigkeit des Trägerkörpers einstellbar ist. Die Fügestellen können auch in Längsrichtung der Strömungskanäle versetzt vorgesehen sein oder derart angeordnet werden, daß entlang der Höhe sowie der Breite eines Bereichs des Trägerkörpers jeweils gefügte und ungefügte Faltungsrippen aufeinander folgen. Die Anordnung der Faltungsrippen in einem gegebenen Trägerkörperbereich kann letztlich auch statistisch erfolgen. Insgesamt gesehen, werden hierdurch Bereiche des Trägerkörpers mit erhöhter Steifigkeit ausgebildet, die von zusammenhängenden Bereichen ohne Fügestelle und mit erhöhter Dehnfähigkeit begrenzt werden können.

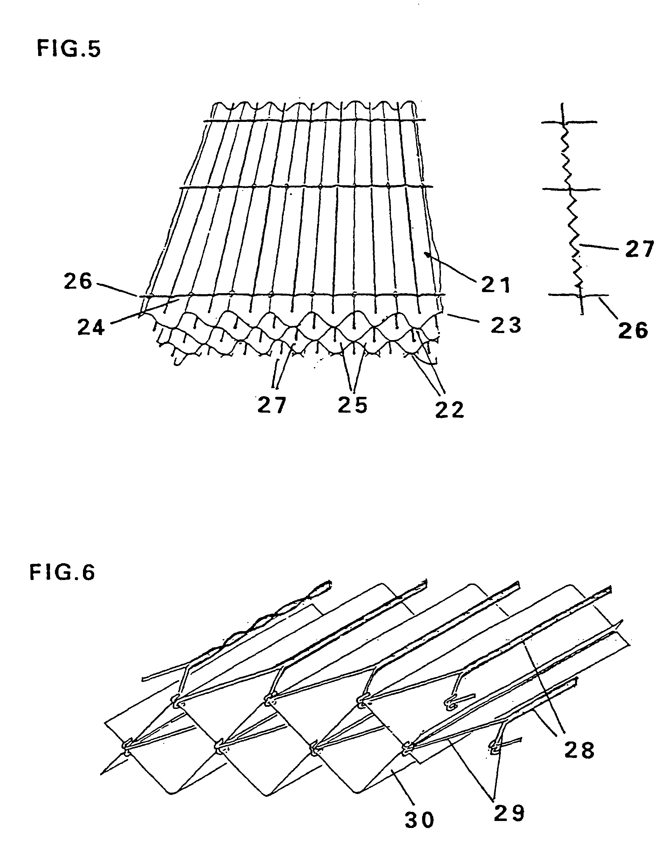

Figur 5 zeigt einen Ausschnitt aus einem Trägerkörper mit einem mäanderförmig abgelegten Blechband 21, wobei zwischen den einzelnen über die stirnseitig angeordneten Verbindungsstege 22 miteinander verbundenen Blechlagen 23 Drahtgitter 24 eingelegt sind. Die quer zu den röhrenförmigen und etwa runden Strömungskanälen 25 verlaufenden Versteifungsdrähte 26 sind in Einbuchtungen der Blechwellungen derart eingelegt, daß die in Längsrichtung der Strömungskanäle verlaufenden Drähte 27 in der Mitte der Strömungskanäle 25 positioniert sind, wobei die Drähte alternativ auch gebogen oder verdrillt sein können, wie in Figur 5, rechts, angedeutet. Die Drähte 26 können durch Punktschweiß- oder Lötverfahren mit den Drähten 27 verbunden sein, die Drähte 26, 27 können auch lose miteinander verflochten sein. Bei der gezeigten Anordnung sind die Drähte 27 in deren Längsrichung vollumfänglich umströmbar. Sie stellen zusammen mit der sie umgegebenden Kanalwand ebenfalls eine alternative Konfiguration von Trägerflächen und umströmbaren Kanten im Sinne der Erfindung dar, wobei die Kante oder Kanten in dieser Bauart an einem benachbarten andersartigen Bauteil angeordnet bzw. gebildet ist.

Alternativ oder zusätzlich können die Drähte 27 an ihren jeweiligen Enden auch durch quer zu den Kanälen verlaufende Blechabschnitte gehaltert werden, die an oder benachbart zu den Verbindungsstegen 25 oder an den Blechlagen befestigt sind. Diese Blechabschnitte können auch als stirnseitig in die Kanäle eingeführte Einsatzstücke ausgebildet sein.

Figur 6 zeigt eine weitere Ausführungsform, bei welcher in der Mitte der im wesentlichen quaratischen Strömungskanäle in Längsrichtung derselben verlaufende Stege 28 vorgesehen sind. Die Endbereiche der Stege sind gespalten, so daβ die beiden Endstücke 29 der Stege 28 an den Berührungspunkten benachbarter Blechlagen 30 durch Umbördelung der freien Enden miteinander und mit den Blechlagen verbunden sind. Sämtliche oder ein Teil der Stege können, gegebenenfalls bereichsweise, entlang ihrer Längsachsen verdrillt sein, wie in der Figur, links, beispielhaft angedeutet, wodurch sich zwei umströmbare Kanten mit wendelförmigem Verlauf ergeben. Die bogenförmigen Kanten können auch anders verlaufen wie z.B. spiral- oder wellenförmig.

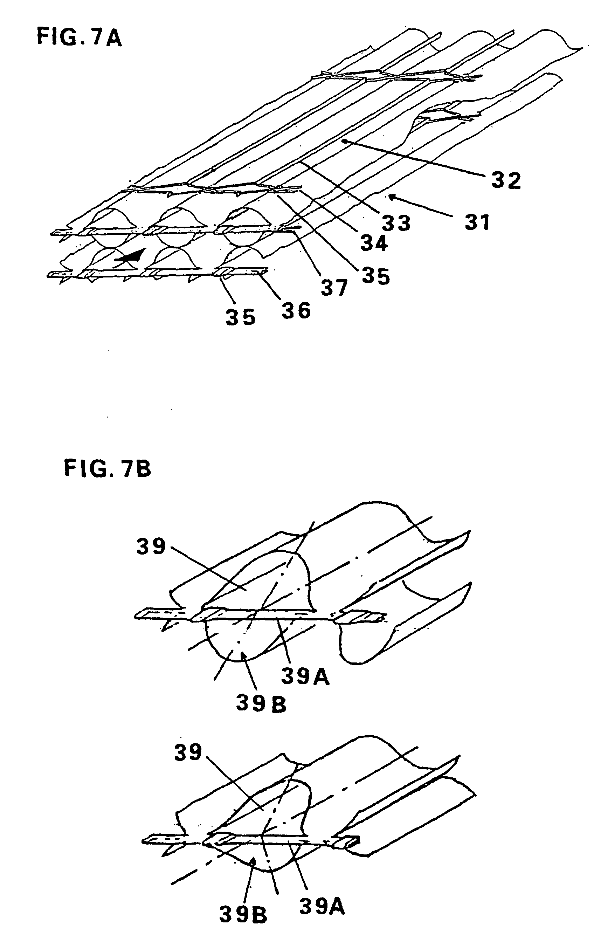

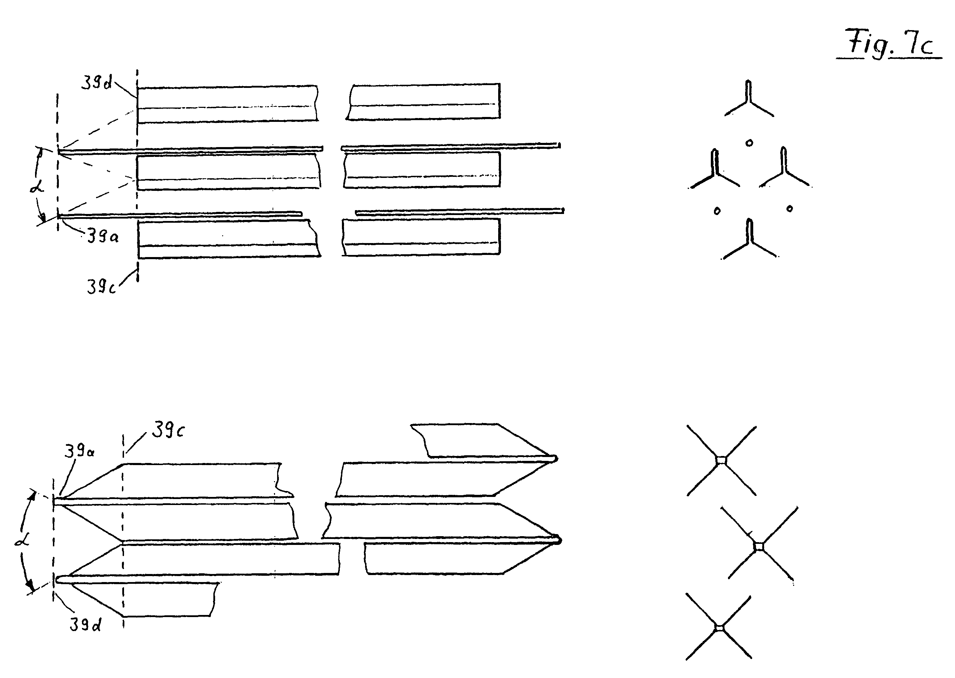

In einer Weiterbildung der Ausführungsformen gemäß Figur 5 und 6 zeigt Figur 7a einen Trägerkörperausschnitt, bei dem zwischen den einzelnen Blechlagen des mäanderförmig abgelegten Wellblechbandes 31 Streckmetallagen 32 eingelegt sind. Die Streckmetallagen weisen jeweils in der Mitte der hier etwa runden Strömungskanäle angeordnete längsverlaufende Stege 33 mit zwei Kanten auf, die über sich kreuzende und jeweils einstückig aneinander angeformte Verbindungsstege 34 miteinander zu einer Lage verbunden sind. Die Verbindungsbereiche 35 der Verbindungsstege 34 sind in Einbuchtungen der Blechlagen 31 eingelegt. Durch die jeweils rautenförmige Anordnung der Verbindungsstege 34 entstehen innerhalb der Streckmetallagen Dehnungsbereiche, die Längenveränderungen z.B. aufgrund von Temperaturschwankungen längs und quer zu den Stegen 33 aufnehmen können. Die kreuzförmig angeordneten Verbindungsstege 34 können an der Gehäusewand oder einer den Trägerkörper durch Ziehen der Zwischenwand befestigt werden, wobei aufgrund der V-förmigen Anordnung der Verbindungsstege ein Dehnbereich gegenüber dem Gehäuse bzw. der Zwischenwand gegeben ist. Des weiteren verhindern die V-förmig angeordneten Verbindungsstege 34 ein Verrutschen der Blechlagenwellungen relativ zur Streckmetallage quer zu den Strömungskanälen, wodurch der Trägerkörper zusätzlich stabilisiert wird.

Die Blechlagen des mäanderförmig abgelegten Blechbandes 31 werden an ihren Stirnseiten durch den durch Ausstanzungen erzeugten und durch die Faltungsstelle 35 verkürzten Faltungssteg 36 begrenzt und miteinander verbunden, wobei sich der Faltungssteg 36 über die gesamte Breite des Trägerkörpers erstreckt. In dem Faltungssteg 36 sind zur zusätzlichen Stabilisierung Versteifungsdrähte 37 eingeklemmt. Durch den Faltungssteg 36 wird des weiteren die Katalysatorfläche im Bereich turbulenter Strömung des einströmenden fluiden Mediums vergrößert und kann gleichzeitig unter Abwinkelung gegenüber der Hauptebene der Blechlagen als Strömungsführung dienen.

Bei entsprechender Formgebung der Ausstanzungen kann der Einströmbereich 39 der Strömungskanäle, wie in Figur 7b gezeigt, schräg zu der Stirnseite des Trägerkörpers verlaufen oder V-förmig ausgebildet ein, wodurch die axiale Länge der Turbulenzzone und die Strömungsverhältnisse im Ein- bzw. Ausströmbereich an den Anströmwinkel des fluiden Mediums bzw. den Turbulenzgrad desselben angepaßt werden können.

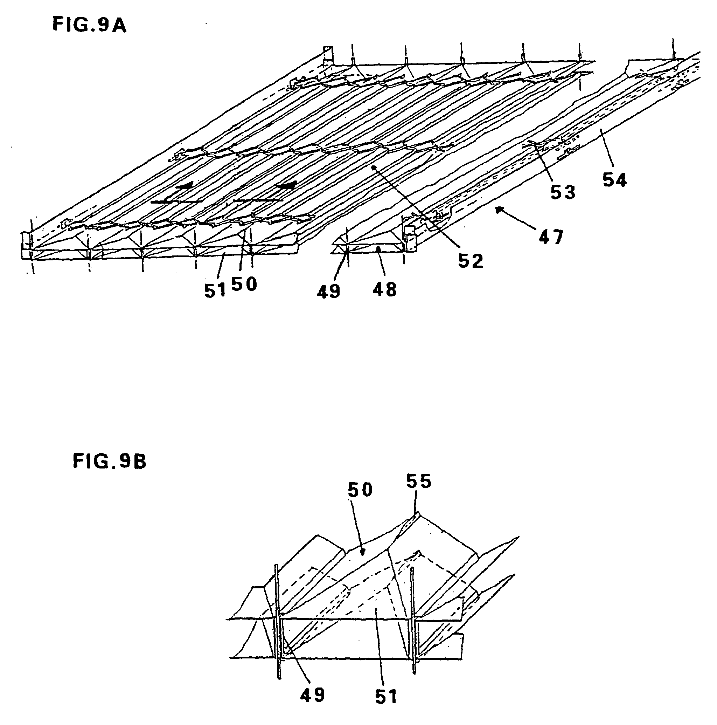

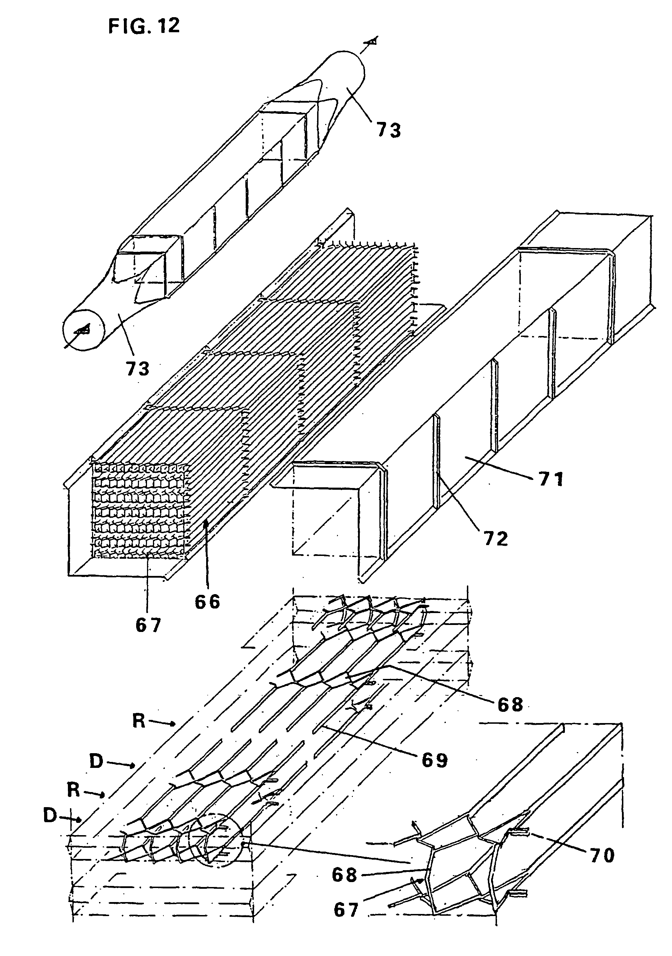

Allgemein gesagt sind somit, wie in den Figuren 7a, b, c beispielhaft gezeigt, durch die horizontalen Stege 39a als auch die abgeschrägten Bereiche 39b Mittel vor bzw. nach dem Einund/oder Ausströmbereich eines Strukturkörpers vorgesehen (vgl. auch Fig. 9a, Schräge 51, Fig. 12, Stäbe 68), die axial von den Wabenkörper- bzw. Strukturkörperstirnseiten 39c vorstehen (siehe Figur 7c) und eine Strömungsumlenkung des Mediums bezüglich der Hauptströmungsrichtung innerhalb des Strukturkörpers bzw. dessen Längsrichtung bewirken. Die Strömüngsumlenkung kann z.B. in Art einer makroskopischen Strömungsrichtungsänderung erfolgen oder auch z.B. in Art einer Verwirbelung, wie an den Vorder- bzw- Ablenkkanten 39a der Einschnitte in Figur 7a-c. Die Mittel können jedem Strömungskanal oder Strömungspfad separat zugeordnet sein. Die Erstreckung der Mittel in Strömungsrichtung kann klein sein gegen die Strukturkörperlänge, z.B. im Bereich einiger (z.B. 10) oder weniger als eines Kanal- bzw. Strömungspfaddurchmessers. Es erfolgt somit eine kontinuierliche oder schrittweise Änderung der Strömungsverhältnisse durch Strukturelemente im Einströmbereich des Strukturkörpers über eine Tiefe ausgehend von der stirnseitigen Einhüllenden 39d der vorstehenden Strömungsumlenkmittel über eine gewisse Tiefe, die z.B. 0,5 bis 10 (ohne hierauf beschränkt zu sein) der Strömungskanalweiten bzw. der Abstände der Kernströmungen, d.h. der Strömungspfade höchster Strömungsgeschwindugkeiten, entsprechen kann. Die Mittel können einstückig an den Blechlagen angeformt sein, z.B. durch die oben beschriebenen Einschnitte oder durch axiale Verlängerung strukturierter oder ebener Blechlagen erzeugt werden, oder als separate Bauelemente ausgeführt sein, z.B. in Form sich axial erstreckender Drähte. Die Mittel können zentrisch zu Strömungskanälen bzw. Strömungspfaden mit höchster Strömungsgeschwindigkeit angeordnet oder auch jeweils zwischen diesen. Das axiale Vorstehen der Strömungsumlenkmittel bezieht sich auf die Stirnseite bzw. stirnseitige Einhüllende 39e des Wabenkörpers, die den Beginn der einzelnen Strömungskanäle bzw. Strömungspfade, die sich aus einer Aufeilung der auf den Strukturkörper treffenden Gesamtströmung in Teilströme ergeben, im Einströmbereich des Strukturkörpers definiert. Die vorstehenden Mittel können somit entsprechend auch bei Wabenkörpern mit konisch geformter Stirnseite vorgesehen sein, die z.B. durch Teleskopieren eines gewickelten Bandes erzeugbar sind. Die Mittel können insbesondere ggf. auch bei Strukturkörpern ohne erfindungsgemäße Versteifungselemente verwirklicht sein, ggf. auch bei Strukturkörpern mit teilweise oder ganz ungehindertem Fluidaustausch in einer oder zwei Querrichtungen. Die freien Enden der vorstehenden Bereiche können mit dem mittig zwischen diesen liegenden Stirnseitenbereich einen Winkel zwischen 150-20°, vorzugsweise 90-30° einschlieβen.

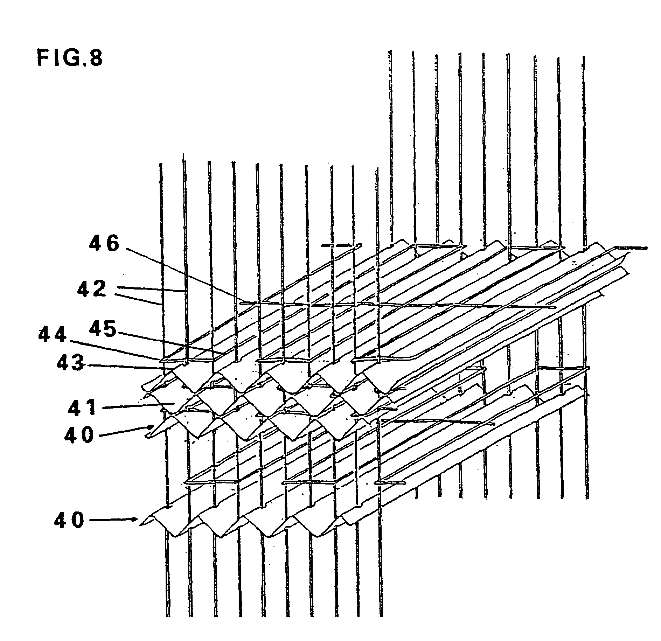

Figur 8 zeigt einen Ausschnitt aus einem Trägerkörper mit entgegengesetzt zueinander angeordneten Blechlagen 40, durch welche röhrenförmige und etwa quadratische Strömungskanäle 41 ausgebildet werden. Die Blechlagen werden seitlich zueinander durch die Versteifungsdrähte 42 stabilisiert, die durch entsprechende Durchgangsöffnungen in den Faltungskanten 43 der Blechlagen geführt sind und sich über die gesamte Höhe des Trägerkörpers erstrecken. Zwischen den Blechlagen 40 um die Versteifungsdrähte 42 gewunden sind zick-zack-förmig Drähte 44 angeordnet, deren Bereiche 45 in der Mitte der Strömungskanäle als eine umströmbare Kante positioniert sind und ggf. zumindest bereichsweise wendelförmig verlängert zur Intensivierung der katalytischen Reaktion ausgeführt sein können. Zur weiteren Stabilisierung des Trägerkörpers sind die Drähte 46 in die mittleren Bereiche 45 der Drähte 44 eingeflochten.

Wie des weiteren aus Figur 8 hervorgeht, kann der Trägerkörper dadurch hergestellt werden, daß abwechselnd die Blechlagen 40 sowie die gitterartigen Lagen der Drähte 44, 46 auf die parallel zueinander ausgerichteten Versteifungsdrähte 42 aufgezogen werden.

Figur 9a zeigt einen Ausschnitt aus einem Trägerkörper aus einem mäanderförmig abgelegten strukturiertem Blechband 47, wobei durch Ausstanzungen in den stirnseitig angeordneten Faltungsbereichen Einströmöffnungen 48 für ein fluides Medium entstehen, wobei zwischen den Ausstanzungen die die Blechlagen miteinander verbindende Stege 49 verbleiben. In die V-förmigen umgeformten Stege 49 sind über die Höhe des Trägerkörpers die Blechlagen miteinander verbindende vorgespannte Versteifungsdrähte eingeklemmt. Zur Einströmumlenkung bei einer schrägen Anströmung des Trägerkörpers sind die stirnseitigen Enden der Rinnen 50 mit zur Stirnseite hin angestellten Abschrägungen 51 versehen, die eine schaufelartige Umlenkung des eintretenden Mediums bewirken, wodurch in diesem Fall Verwirbelungen des Mediums in Strömungsrichtung vermindert werden.

Die zwischen den einzelnen Blechlagen angeordneten isolierten Streckmetallagen 52 entsprechen in ihrem Aufbau sowie in ihrer Ausrichtung bezüglich der Blechlagen denen gemäß Figur 7. Die kreuzförmig angeordneten Verbindungsstege 53 der Streckmetallagen 52 sind an den zu nahezu gasdichten Seitenwänden zusammengefügten seitlichen Faltungsschenkel 54 der Blechlagen verbunden, indem die Enden der Verbindungsstege durch Durchtrittsöffnungen der Faltungsschenkel geführt und außenseitig umgebördelt sind. Die Streckmetallagen werden hierdurch an einer Zwischen- bzw. Außenwand des Trägerkörpers festgelegt, wobei die V-förmig angeordneten Verbindungsstege als Dehnungsausgleich bei Temperaturschwankungen dienen.

Wie in Figur 9b gezeigt, sind zur Ausbildung der dreieckigen Rinnen 50 mit den stirnseitigen Abschrägungen 51 sowie der V-förmigen Ausbildung der Verbindungsstege 49 jeweils an den nach oben bzw. unten weisenden Faltungskanten der Blechlagen Faltungsrippen 55 vorgesehen. Diese von einem Fluid umströmbaren Faltungsrippen stellen ebenfalls umströmbare Kanten an den Blechlagen dar, die zusammen mit den umströmbaren Kanten der Streckmetall-Stege die Katalysatoreffektivität in den spaltförmigen Kanälen vergrößern.

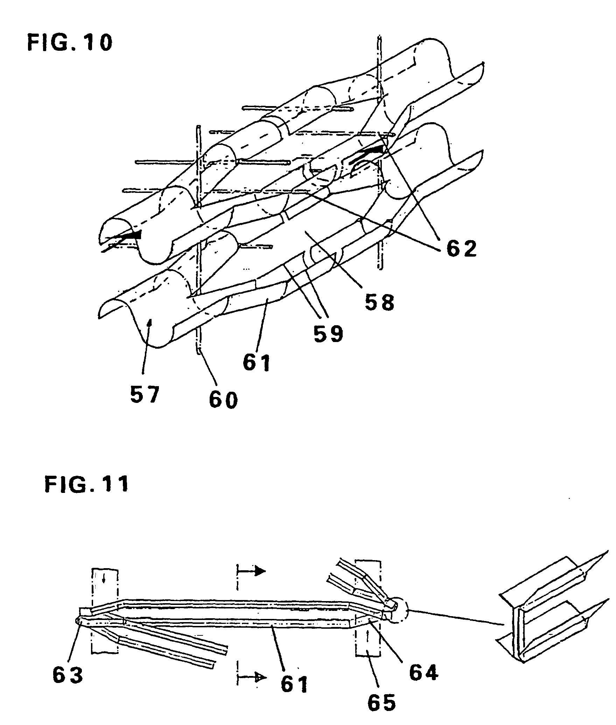

Figur 10 zeigt einen Ausschnitt eines Trägerkörpers, bestehend aus gewellten Blechlagen 57, an denen einzelne durch die parallelen Einschnitte 58 erzeugte rinnen- bzw. halbkreisförmige freistehenden Profile 61 senkrecht zu den Blechlagen abwechselnd nach oben und nach unten ausgelenkt sind. Die einzelnen Blechlagen bzw. abschnittsweise Profillagen sind kongruent zueinander abgelegt, wodurch im axial mittleren Bereich ein Verband oder eine Bündelanordnung aus höhenversetzten Profilstegen 61 entsteht. An den Einschnitten 58 parallel zur Strömungsrichtung des Fluids verlaufen die katalytisch wirksamen Kanten 59 der Profile 61. Zur Stabilisierung des Trägerkörpers sind senkrecht zu den Blechlagen 57 angeordnete, in den Enden der Einschnitte 58 angeordnete Drähte 60 vorgesehen, die in dem Zwickel zwischen den nach oben und unten ausgelenkten rinnenförmigen Profilstegen 61 eingeklemmt sind und sich über die gesamte Höhe des Trägerkörpers erstrecken können. Eine zusätzliche Befestigung der vertikalen Drähte 60 erfolgt an den Blechlagen 57 und der horizontalen Drähte 63 an den Profilen 61 durch die Beschichtungsaufdickung oder durch geeignete Formschlußmittel.

Die ausgelenkten Rinnen 61 mit umströmbaren Kanten 59 werden durch weitere quer zu diesen verlaufende Versteifungsdrähte 62, die jeweils an den Enden der horizontal verlaufenden Abschnitte sowie in den mittleren Bereichen vorgesehen sind, unterstützt oder getragen, wodurch die einzelnen Stege in ihrer Höhe fixiert werden. Insgesamt ist über die Einschnitte 58 ein Austausch eines fluiden Mediums sowohl in Querrichtung als auch über die Höhe des Trägerkörpers möglich. Es entsteht dadurch im mittleren Bereich ein Profilbündel in einem zusammenhängendem Gasplenum. Beim Durchströmen eines solchen Trägerköpers erfolgt zunächst am Eintrittsbereich eine Aufteilung und Separierung in viele Strömungsspalten. Danach wandeln sich die Spaltwände in viele Profile um, die gemeinsam ungeteilt umströmt von einem zusammenhängendem Gasplenum umgeben sind, und am Austrittsbereich teilt sich die Strömung wieder in separte Spalte auf. Die Umschließung des mittleren Gasplenums umfänglich nach Außen erfolgt durch das hier nicht gezeigte Trägerkörpergehäuse. Eine Befestigung des Trägerkörpers an einem Gehäuse kann dabei sowohl über die Versteifungsdrähte 60, 62 als auch die quer verlaufenden gewellten Bandabschnitte 57 erfolgen.

Wie aus Figur 11 an einem vergrößerten Ausschnitt hervorgeht, können sich nach dem Prinziep von Figur 10 die rinnenförmigen Profile 61 über nahezu die gesamte Länge im Mittelbereich des Trägerkörpers erstrecken, wobei das mäanderförmig abgelegte Blechband 63, von dem hier drei Lagen dargestellt sind, durch in den abgeknickten bzw. gebogenen Abschnitten 64 angeordnete kreuzende Bänder 65 stabilisiert wird. Es können zusätzlich auch entsprechend der Ausführungsform nach Figur 10 lagenweise Drähte oder Bänder vorgesehen sein, die z.B. miteinander verbunden bzw. gefügt oder lose verwoben sind. An beiden Stirnseiten gehen hier die Profillagen 61 des mittleren trägerkörperbereichs einstückig in profilierte Bandabschnitte 63 über, die wiederum durch Stege entsprechend 49 in Figur 9a, 9b la-genweise verbunden sind.

Wie aus Figur 12 hervorgeht, kann der gesamte Trägerkörper 66 ausschließlich als Profilbündel aufgebaut werden, wobei nach dem Ausführungsbeispiel die Profile aus einem mäanderförmig abgelegten Streckmetallband gebildet werden, wobei die Umlenkbereiche 67 durch U- bzw. V-förmig gebogene Stege 68 gebildet werden. Die Stege 69 haben vier umströmbare Kanten. Je nach deren Querschnittsgröße und Ausführung können bei den aus geschlitztem Blech erzeugten Stegen die Einzelkanten als eine Kante zusammenwirken, bei breiteren Stegen bzw. Profilen als zwei Kanten wirken, bei größerer Blechdicke sogar separat als vier Kanten wirken, wenn zwischen den Kanten noch genügend ebene Fläche bestehen bleibt. Wie zu Figur 6 erläutert, können auch hier die Stege bzw. Profile geringfügig verdrillt oder gebogen sein, um die Turbulenz an den Kanten und Flächen effizienzsteigernd zu vergrößern. Zur Befestigung des Trägerkörpers 66 sind an den dehnbaren Verbindungsbereichen 68 der vollumfänglich umströmbaren Stege 69 seitlich vorstehende Laschen 70 vorgesehen. Wie in Figur 12, Mitte, gezeigt, kann der Trägerkörper in einem Gehäuse aus zwei Halbschalen 71 angeordnet werden und durch Einklemmen der Laschen 70 in den Gehäusesicken 72 befestigt werden.

Der gezeigte Trägerkörper weist eine in Querrichtung als auch in der Höhe offene und mediendurchlässige Trägerstruktur auf, die eine Homogenisierung der Zusammensetzung sowie der Geschwindigkeitsverteilung in dem damit vollständig ungeteilt umgebenden Gasplenum über den Querschnitt des Trägerkörpers ermöglicht. Dies ist insbesondere auch dann vorteilhaft, wenn im Bereich der Einström- bzw. Ausströmstutzen 73 Querschnittsveränderungen und ungleichmäßige Strömungsbeaufschlagungen auftreten. Aufgrund der meist vorhandenen Querschnittsdifferenz zwischen Anströmung und Trägerquerschnitt ist dies immer ein Problem und deshalb eine solche Bündelstruktur immer vorteilhaft. Das Gasplenum ist am Auβenumfang vom Gehäuse 71 umschlossen. Falls gewünscht, kann ein Trägerkörper mit einer allseitig offenen Struktur, wie z.B. in Figur 12 gezeigt, auch lediglich im Ein- bzw. Ausströmbereich eines anders strukturierten Trägerkörpers vorgesehen sein.

Der Trägerkörper nach Fig. 12 besteht somit aus mehreren alternierend hintereinander angeordneten kurzen Durchmischungszonen D mit hohen Strömungsformwiderständen, wobei zu diesen Zonen auch die Ein- und Ausströmbereiche zählen und mit zwischen diesen angeordneten Reaktionszonen R, in welchen der Strömungswiderstand im wesentlichen durch die Reibkraftwirkung mit den Kanalwänden bzw. Katalysatorträgerelementen bestimmt wird. Einen entsprechenden Zonenaufbau weisen auch die Trägerkörper der Fig. 13 und 15 auf. Die Eintrittszone ist zur Maximierung des Produktes aus Fläche zu Wärmeübertragungsbeiwert entsprechend gestaltet bzw. gestaltbar.

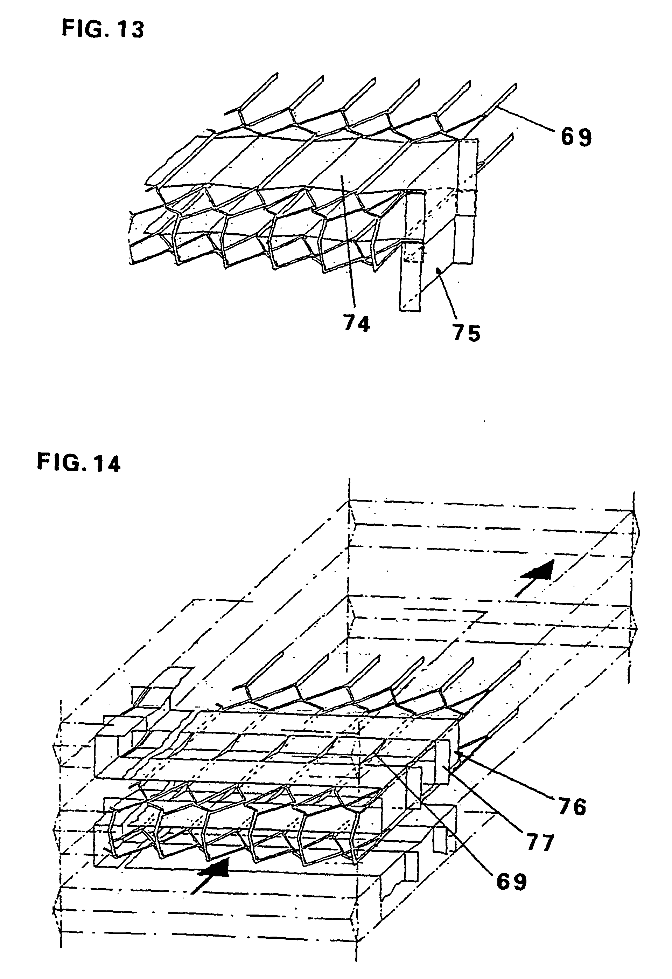

Figur 13 zeigt wie ein Trägerkörper gemäß Figur 12 durch Einflechten von quer zu den Stegen 69 verlaufende Versteifungsbänder 74 zusätzlich stabilisiert werden kann. Die Bänder unterschiedlicher Lagen überlappen einander zum Aufbau flexibler Seiten- bzw. Zwischenwände 75 und sind mit seitlich vorstehenden Bandabschnitten versehen, die an einem Gehäuse festlegbar sind.

Gemäß Figur 14 können anstelle der einzelnen Versteifungsbänder auch mäanderförmig abgelegte breitere Bänder 76 vorgesehen sein, die in die Streckmetallagen kreuzend und diese stabilisierend eingeflochten sind und die an den Umlenkbereichen ausgeklinkte und seitlich vorstehende Abschnitte 77 zur Befestigung an einem Gehäuse oder zur Verbindung mit senkrecht verlaufenden Versteifungselementen aufweisen. Die mittleren Bereiche der Bänder sind mit quer zu den Strömungspfaden verlaufenden Rinnen profiliert, die mit Einschnitten versehen sind, in welche die Stege 69 der Streckmetallagen stabilisierend unter seitlicher Fixierung eingelegt sind.

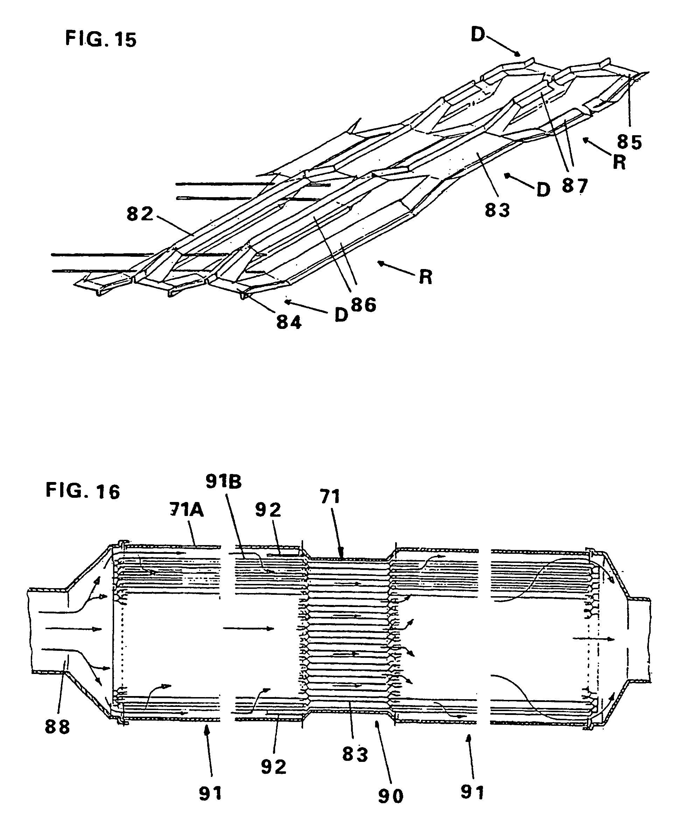

Figur 15 zeigt den Ausschnitt einer Blechlage 83, 84, 85, die entsprechend derjenigen nach Figur 4 mit längs verlaufenden Faltungsrippen 82 versehen ist, wobei sich zwischen kongruent zueinander abgelegten Blechlagen für zwei axiale Bereiche je ein sich über die gesamte Breite sowie die gesamte Trägerkörperhöhe erstreckender Strömungsraum ausgebildet wird. An drei axialen Bereichen, vorn, hinten und in der Mitte, bleibt die Spaltkanal-Struktur mit darin voneinander getrennten Strömungswegen aus Strömungs- und Stabilitätsgründen erhalten. Je nach längenmäβiger Aufteilung dieser Bereiche ist zwischen Strömungs- und Stabilitätserfordernissen zu optimieren. In die Blechlagenabschnitte 83, 84, 85 der strukturierten Blechlage, die zwischen dem mittleren Bereich 83 und dem vorderen bzw. hinteren Bereich 84, 85 angeordnet sind, sind durch Längsschlitzung und seitliche Zusammenstauchung zu Sternprofilen 86, 87 entsprechend Figur 10 und 11 bezüglich der Blechlagenebene nach oben bzw. unten ausgelenkte Dreisternprofile 86, 87 mit umströmbaren Kanten ausgebildet, die lagenweie kongruent ineinandergreifend mit senkrechten und waagerechten Versteifungselementen 60 und 62 entsrechend Figur 10 und 11 zu einer Trägerkörperstruktur verbunden werden. In einer Weiterbildung können die stumpfwinkeligen Sternprofile 86 und 87 gleichoder gegensinnig zueinander verdrillt ein, wodurch die Gesamtlänge der umströmbaren Kanten sowie die Turbulenz an den Stegen bzw. deren Kanten und Flächen ansteigt und die Mediendurchwirbelung und katalytische Effizienz verbessert wird.

Es versteht sich, daß aus entsprechend geschlitzten ebenen und/oder wellig bzw. winkelig strukturierten Blechlagen und durch Strecken sowie örtliches Stauchen, Biegen und Verdrillen umströmbare Profile mit umströmbaren Kanten in vielfacher Form und Anordnung zueinander mit allgemeinem Fachwissen zu vielen speziellen Anwendungsanforderungen weiter variiert und angepaßt werden können.

Wie in Figur 16 dargestellt kann aus Blechlagen, die gemaβ den Erläuterungen zu Figur 15 gestaltet sind, ein Katalysator aufgebaut werden, bei dem im Einströmbereich 88 das Medium aufgrund der beabstandeten Gehäusebereiche 91a sowohl stirnseitig als auch seitlich in den Trägerkörper eintreten kann, und zwar von allen vier seitlichen Begrenzungsflächen 91b, wobei auch ein Eintritt von nur zwei oder einer Seite möglich ist. Es liegt auch hier eine allseitig offene Trägerkörperstruktur als Profilbündel in einem umgebenden gemeinsamen Gasplenum vor, wobei im mittleren Bereich des Trägerkörpers die Ausbreitung des Mediums beschränkt ist, in diesem Fall durch die durch die Abschnitte 83 der Blechlagen gebildeten spaltförmigen Strömungskanäle. Das Gehäuse 71 weist im mittleren Bereich 90 des Trägerkörpers einen gegenüber den vor- bzw. nachgelagerten Bereichen 91 verminderten Querschnitt auf. Um den seitlichen Ein- bzw. Austritt des Mediums in die seitlich geöffneten Trägerkörperbereiche 91 zur vergleichmäßigung auf einen bestimmten Abschnitt zu beschränken, sind gestaltbare Strömungsleitbleche 92 vorgesehen, die sich an den mittleren Gehäusebereich anschließen und die zum Gehäuse hin axial verschieden lang oder verschiebbar ausgebildet sein können, wodurch die Strömungscharakteristik des Katalysators veränderbar ist.

Alternativ können die Bereiche 90, 91 des Trägerkörpers auch jeweils als separate Trägerkörper ausgebildet sein.

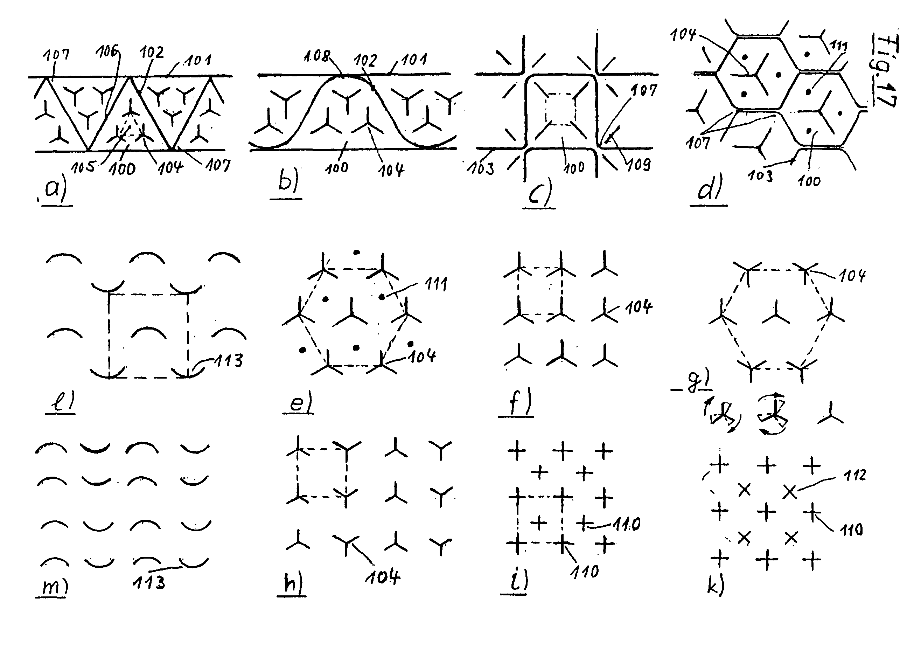

Figur 17 zeigt verschiedene Anordnungen von Stegen mit jeweils zwei, drei oder vier umströmbaren Kanten, wobei mehrere Stege an ihren Enden jeweils durch Blechabschnitte verbunden sein können, wie beispielsweise in den Figuren 4, 10 oder 11 gezeigt.

Gemäß den Figuren 17a-d sind Bündel von Profilstegen in Strömungskanälen 100 mit dreieckigem, sinusförmigem, quadratischen oder sechseckigen Querschnitt angeordnet. Diese Kanalstrukturen können durch abwechselnde Anordnung von glatten und zick-zack-förmigen bzw. gewellten Blechlagen 101, 102 (Figuren 17a und b) bzw. durch kongruentes oder spiegelverkehrtes Ablegen jeweils identisch profilierter Blechlagen 103 erzeugt werden. In den separaten Strömungskanälen 100 sind gemäß den Figuren 17a und b jeweils drei Profilstege 104 mit je drei sternförmig angeordneten Profilrippen, die jeweils einen 120°-Winkel einschließen, angeordnet. Nach Figur 17a sind die Profile jeweils unter gleicher Ausrichtung zu den Kanalwänden versetzt zueinander in einer trigonalen Anordnung positioniert (siehe gestrichelte Linie) und umschließen einen zentralen Strömungspfad 105. Die Profilrippen in etwa auf die Wandmitten 106 sowie auf die Stoβlinien 107 aneinandergrentender Kanäle ausgerichtet.

Nach Figur 17b sind bei sinusförmigen Kanälen 100 die dreizakkigen Profilstege in einer verzerrt trigonalen Anordnung zueinander auf Lücke angeordnet, wobei dem Scheitel 108 der Blechlagenwellung V-förmig zueinander stehende Profilrippen zugewandt sind.

Nach Figur 17c sind die flachen Profilstege 109 mit zwei umströmbaren Kanten in den quadratischen Kanälen ebenfalls quaratisch angeordnet, so daß, wie in Figue 17a, die Geometrie der Steganordnung der Kanalgeometrie entspricht. Die umströmbaren Kanten der Stege 109 weisen auf das Zentrum des Kanals 100 sowie auf die Stoβlinien 107 angrenzender Kanäle 100. In einer möglichen Abwandlung können die vier Stege 109 auch zu einem vierrippigen Steg mit Mittelachse im Kanalzentrum zusammengefasst sein.

In den Zentren der hexagonalen Strömungskanälen 100 nach Figur 17d sind dreirippige Stege 104 angeordnet, wobei die Rippen auf die Stoßlinien 107 angrenzender Kanäle 100 weisen. In den Zentren der rautenförmigen Zwischenräume sind umströmbare Drähte 111 angeordnet, wobei auch andere Profile vorgesehen sein können.

In den Figuren 17e-k sind Anordnungen von Profilbündeln gezeigt, die in einem gemeinsamen Gasplenum angeordnet sind. Die Profilstege 104 sind entsprechend Fig. 17a ausgeführt, die Profilstege 110 sind vierrippig mit vierzähliger Symmetrie. Wie durch die Pfeile in Figur 17g angedeutet können die Profilstege auch verdrillt sein, was auch für die Profilstege der Figuren 17a-f,h-k gilt, insbesondere jeweils gleichsinnig.

Im Einzelnen sind bei der hexagonal zentrierten Anordnung (siehe gestrichelte Linie) der jeweils gleich ausgerichteten, zueinander verschobenen Stege 104 nach Figur 17e in den Zentren der hexagonalen Zwischenräume umströmbare Drähte 111 angeordnet.

Nach Figur 17f sind die dreirippigen Stege 104 bei gleicher Ausrichtung zu einem Bezugspunkt in einem rechtwinkeligen, hier quadratischen Muster angeordnet.

Die Anordnung der Stege nach Figur 17g entsricht derjenigen von Figur 17e, wobei die Stege in jeder zweiten in der Abbildung horizontalen Reihe um 180° verdreht sind und zu der jeweils benachbarten Reihe auf Lücke stehen.

Im Unterschied zu Figur 17f sind in Figur 17h die Stege in jeder zweiten vertikalen Reihe um 180° gegenüber der benachbarten Reihe verdreht, wobei die quadratische Anordnung der Stege erhalten ist.

Die Figuren 17i und k zeigen quadratisch zentrierte Anordnungen von vierrippigen Stegen, wobei die Stege nach Figur 17i gleichsinnig zueinander ausgerichtet sind, nach Figur 17k sind die zentrierenden Stege 112 jeweils um 45° gegenüber der Lage nach Figur 17i verdreht, so daβ die Rippen in Richtung der Winkelhalbierenden des von benachbarten Rippen der Stege 110 eingeschlossenen Winkels zeigen.

Die Figuren 17 1 und m zeigen Anordnungen rinnenförmiger Profile mit kreisbogenförmiger Kontur. Nach Figur 171 sind die Rinnen 114 orthogonal zentriert angeordnet, wobei Rinnen benachbarter horizontaler Reihen jeweils um 180° um ihre Längsachse verdreht und zur benachbarten Reihe seitlich verschoben sind. Der Rinnenabstand ist dabei derart, daß die Kanten einer Rinne oberhalb einer Rinne einer benachbarten Reihe positioniert sind. Figur 17m zeigt eine orthogonale Rinnenanordnung in der die Rinnen in vertikalen Reihen kongruent gestapelt sind, wobei die Rinnen benachbarter Stapel mit ihren Innenseiten jeweils entgegengesetzt zueinander angeordnet sind.

Es versteht sich, daß andere Anordnungen der Stege, die auch mehr als vier Rippen Aufweisen können, und andere Kombinationen von Stegen, gegebenenfalls auch mit anderen Arten von Trägerelementen und/oder in anderen Kanalgeometrien möglich sind.

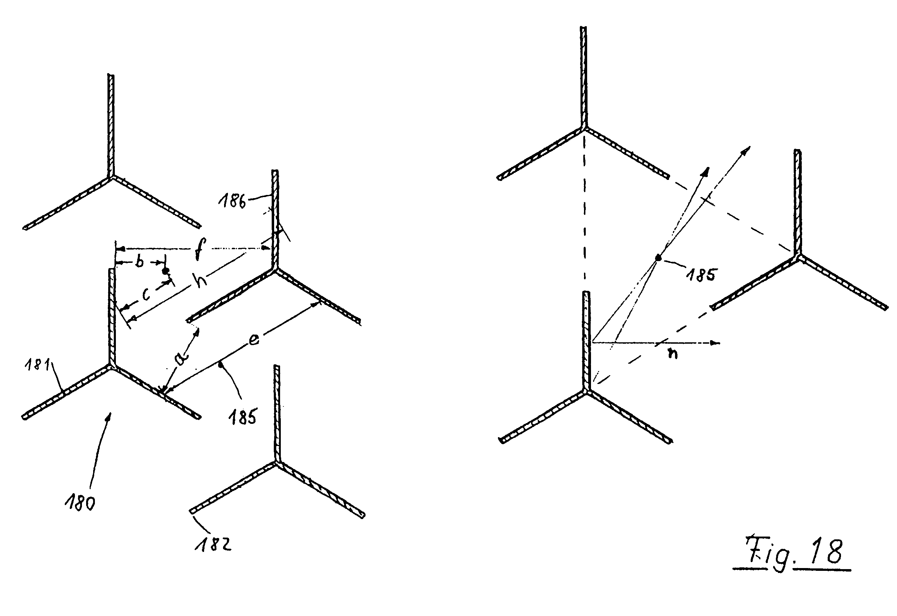

Figur 18 zeigt beispielhaft einen Trägerkörperausschnitt mit einer Anordnung von vier identischen Trägerelementen 180 mit jeweils drei Rippen 181, die einen Winkel von 120° einschlieβen. Die langgestreckten Trägerelemente 180 sind in einer zweidimensional hexagonal dichtesten Anordnung gepackt, wobei die frei umströmbaren Kanten 182 jeweils entlang der Winkelhalbierenden (gestrichelte Linie) des benachbarten Trägerelements ausgerichtet sind. Der nächste Abstand von umströmbaren Oberflächen benachbarter Trägerelemente, die einen Strömungspfad umgrenzen, ist hier der Abstand a der umströmbaren Kanten 182 zu der Oberfläche der Rippen des benachbarten Trägerelements 180. Der kleinste Abstand a ist in dem Ausführungsbeispiel durch die verstopfungsfreie Tauchbeschichtbarkeit gegeben und beträgt 3-20mal der Beschichtungsdicke oder mehr, wodurch sich z.B. bei Automobilanwendungen bei Blechdikken von 0,025-0,125 mm Abstände von 0,075-2,5 mm ergeben. Der kleinste Abstand kann bei entsprechender Packungsdichte auch sehr viel größer sein, z.B. bis 10 mm oder mehr bei vergleichbaren Strömungs- und Strukturdickenverhältnissen. Bei engster beschichtbarer und sicher beabstandbarer Teilung bildet sich so ein "harter" kurzer Reaktionsraum, bei Weiterteilung ein in "weicher" langer Reaktionsraum.

Der Trägerkörper kann insbesondere zur Steuerung der Reaktion unterschiedliche Packungsdichten aufweisen, die vom Eintritt zum Austritt zunehmen, abnehmen und/oder sich gleichmäßig oder sprunghaft ändern können. Der freie Querschnitt zwischen den festen Strukturanteilen (Porosität) hat sich für verschiedene Anwendungsanforderungen mit ca. 45% bis zu 98% als vorteilhaft erwiesen.

Der Abstand des Strömungspfads mit höchster Strömungsgeschwindigkeit, d.h. der Kernströmung, stellt den kleinsten Abstand b des Strömungskanalmittelpunktes 185 zu den nächstbenachbarten Trägerelementoberflächen 186 dar, die den entsprechenden Strömungspfad umgrenzen, wobei der Abstand c der Abstand der Kernströmung von der Mittellängsachse des den Strömungspfad umgrenzenden Bereichs des Trägerprofils ist. Bei der gezeigten Anordnung beträgt der kürzeste Abstand e zwischen im wesentlichen parallen Trägerflächen benachbarter Trägerelemente ein Vielfaches des kleinsten Abstands a, hier ca. das 3fache. Der nächste Abstand f der Trägerelementoberflächen benachbarter Trägerelemente in Verlängerung des Abstandsvektors b beträgt ein Vielfaches desselben, hier ca. das Dreifache. Der Abstand h in Verlängerung des Abstandsvektors c zu der nächstbenachbarten Trägerelementoberfläche h beträgt wiederum ein Vielfaches des Abstands c, hier das 3-fache, und kann bei entsprechender Anordnung der Trägerelemente auch wesentlich größer sein.

Des weiteren ist in Fig. 18 (rechts) eine entsprechende Anordnung mit vergrößerten Trägerelementabständen wiedergegeben. Insbesondere führt in diesem Ausführungsbeispiel nicht nur die Verbindungslinie der Schwerpunktachse einer Trägerelementoberfläche, die einem bestimmten kanalförmigen Strömungsbereich zugeordnet ist, mit dem Strömungspfad der Kernströmung zu einer nächstbenachbarten Trägerelementfläche, die außerhalb des Strömungspfades (durch die gestrichelten Verlängerungen der Trägerelementbereiche markiert) angeordnet ist und auch nicht einen anderen Teilbereich eines nächstbenachbarten Trägerelementes trifft. Auch die Flächennormale n im Schwerpunkt der einem Strömungspfad zugeordneten Trägerelementoberfläche führt außerhalb des Strömungspfades. Des weiteren führt auch die Verbindungslinie der Trägerelementschwerpunktachse mit dem Strömungspfad der Kernsirömung zu einer nächstbenachbarten Trägerelementoberfläche außerhalb des Strömungskanals.

Die genannten geometrischen Beziehungen lassen sich auch mit anderen Trägerprofilanordnungen, z.B. des in Figur 17 gezeigten, realisieren als auch mit gekrümmten Trägerelenienteoberflächen.

Durch mehr oder wenige dichte Profilpackungen kann erfindungsgemäß erreicht werden, daß sich durch einen Mittenversatz der Profile die an deren Flächen aufgrund Gashaftung bildenden Mikrowirbel nicht entgegengerichtet an eng benachbarten Oberflächen aufheben und so eine die Diffusion bildende Schichtströmung aufgebaut wird, vielmehr sind die Profile derart angeordnet, daß sich ein an einer Fläche bildenden Mikrowirbel in einem vorgegebenen Abstand kein weiterer Mikrowirbel entgegengesetzten Drehsinns erzeugt wird.

## Patentansprüche

1. Katalysatorträgerkörper mit einer Vielzahl von durchgehenden Strömungspfaden für ein fluides Medium und sich in Längsrichtung der Strömungspfade erstreckenden Trägerelementen für ein Katalysatormaterial, wobei Trägerelemente (3,7,17,27,33,45,55,61) vorgesehen sind, die zumindest bereichsweise in Längsrichtung der Strömungspfade umströmbare Kanten (5,8,18,59) aufweisen, **dadurch gekennzeichnet, dass** die umströmbaren Kanten der Trägerelemente als stegförmige Blechfaltungen von Blechabschnitten (3, 7, 17, 55) oder als zumindest bereichsweise vollumfänglich umströmbare Profile (27,28,33,45,61,69,86) ausgeführt sind und dass Versteifungselemente (6,9,12,14,20,26, 42,46,60,62,74) und/oder die Trägerelemente verbindende Verbindungselemente (29,34,53,68) vorgesehen sind, die jeweils an den Trägerelementen (3,7,11,17,27,28,33,43,61,69) mit umströmbaren Kanten angreifen und derart ausgebildet sind, dass eine Lageveränderung der Trägerelemente (3,7,11,17,27,28,33,43,61,69) mit umströmbaren Kanten beschränkt bzw. deren Schwingungsverhalten verändert wird.

2. Trägerkörper nach Anspruch 1, **dadurch gekennzeichnet, dass** die Gesamtlänge der umströmbaren Kanten (5, 8, 18, 59) entlang eines Strömungspfades mindestens ein Viertel der Länge des Trägerkörpers (66) entspricht.

3. Trägerkörper nach Anspruch 1 oder 2, **dadurch gekennzeichnet, dass** der Trägerkörper (66) aus übereinander angeordneten profilierten Blechlagen (1, 10, 16) aufgebaut ist und die Trägerelemente als stegförmige Blechabfaltungen (3, 7, 11) der Blechlagen (1, 10, 16) ausgeführt sind.

4. Trägerkörper nach Anspruch 3, **dadurch gekennzeichnet, dass** die stegförmigen Blechabfaltungen als Faltungsstege von Blechabschnitten mit einem Faltungswinkel von < 30° ausgebildet sind und einen Abstand der umströmbaren Kanten zueinander von einem Vielfachen des umschriebenen Durchmessers der Faltungsstege aufweisen.

5. Trägerkörper nach einem der Ansprüche 1 bis 4, **dadurch gekennzeichnet, dass** die Trägerelemente als Ausklinkungen (7) von Blechlagen ausgeführt sind.

6. Trägerkörper nach Anspruch 5, dadurch gekennzeich-n e t, dass die Trägerelemente (3, 7, 11, 17, 27, 28, 33, 45, 55) innerhalb von durch Blechlagen (1, 10, 40, 101, 102) begrenzten Strömungskanälen (2, 10a, 25, 41) angeordnet sind, die einen Mediumaustausch quer zur Längsrichtung der Strömungspfade begrenzen.

7. Trägerkörper nach Anspruch 6, **dadurch gekennzeichnet, dass** die Trägerelemente (3, 7, 17, 27, 33, 45, 55, 61) im Zentrum der Strömungskanäle (2, 10a, 25, 41) angeordnet sind.

8. Trägerkörper nach einem der Ansprüche 1 bis 7, **dadurch gekennzeichnet, dass** die Trägerelemente (28) zumindest abschnittsweise umströmbare Kanten aufweisen, die bogenförmig ausgebildet sind.

9. Trägerkörper nach einem der Ansprüche 1 bis 8, **dadurch gekennzeichnet, dass** die Trägerelemente (28) zumindest abschnittsweise schaufelartig gebogene Außenflächen aufweisen, die das vorbeiströmende Medium in eine rotierende Bewegung versetzen.

10. Trägerkörper nach einem der Ansprüche 1 bis 9, **dadurch gekennzeichnet, dass** zumindest ein einen ungehinderten Gasaustausch quer zur Längsrichtung der Strömungspfade ermöglichender Bereich (51, 100) des Trägerkörpers mit einer Vielzahl von benachbarten Trägerelementen (52, 69, 104, 111) vorgesehen ist.

11. Trägerkörper nach einem der Ansprüche 1 bis 10, **dadurch gekennzeichnet, dass** die Verbindungselemente zumindest in Teilvolumenbereichen des Trägerkörpers vorgesehen sind und der Querschnitt der Verbindungselemente (29, 34, 46, 68) derart bemessen ist, dass der Strömungswiderstand in Längsrichtung durch den Trägerkörper nicht signifikant erhöht wird.

12. Trägerkörper nach einem der Ansprüche 1 bis 11, **dadurch gekennzeichnet, dass** die Trägerelemente als Streckmetallagen (32, 52) oder Drahtgitter (21, 44, 46) ausgebildet sind.

13. Trägerkörper nach einem der Ansprüche 1 bis 12, **dadurch gekennzeichnet, dass** die Versteifungselemente (6, 12, 20, 26) sich senkrecht und/oder parallel zu den Trägerkörper aufbauenden Blechlagen (1, 10, 16, 23) erstrecken.

14. Trägerkörper nach einem der Ansprüche 1 bis 13, **dadurch gekennzeichnet, dass** Versteifungselemente (12, 14, 60) vorgesehen sind, die an den Verbindungselementen (29, 34, 46, 68) angreifen und die derart ausgebildet sind, dass eine Lageveränderung der Verbindungselemente beschränkt wird.

15. Trägerkörper nach einem der Ansprüche 1 bis 14, **dadurch gekennzeichnet, dass** die Versteifungselemente (6, 12, 20, 26) mit den Blechlagen (1, 10, 16, 23) und/oder Trägerelementen (3, 7, 17, 27, 33, 45, 55, 61) und/oder Verbindungselementen (29, 34, 46, 68) zugaufnehmend befestigt sind.

16. Trägerkörper nach einem der Ansprüche 1 bis 15, **dadurch gekennzeichnet, dass** Versteifungselemente (6, 12, 20, 26, 74) oder von den vollumfänglich umströmbaren Profilen seitlich abgehende Laschen (53, 70) vorgesehen sind, die zugaufnehmend an einem den Trägerkörper umgebenden Gehäuse (71) oder an den Trägerkörper durchziehenden Wandabschnitten (54) befestigt sind.

17. Trägerkörper nach einem der Ansprüche 1 bis 16, **dadurch gekennzeichnet, dass** der Trägerkörper mehrere von den Stirnseiten in Strömungsrichtung beabstandete in Strömungsrichtung aufeinanderfolgende Bereiche (90, 91) aufweist, die sich in lateraler Richtung jeweils über ein oder mehrere Trägerelemente erstrecken, und dass zumindest zwei dieser Bereiche (90, 91) sich in ihrer Struktur unterscheiden.

18. Trägerkörper nach einem der Ansprüche 1 bis 17, **dadurch gekennzeichnet, dass** die Ein- und/oder Ausströmbereiche des Trägerkörpers oder von Trägerkörperbereichen (90, 91) mit Mitteln (51) versehen sind, die eine Änderung der Strömungsrichtung des ein- bzw. ausströmenden Mediums bewirken.

19. Trägerkörper nach einem der Ansprüche 1 bis 18 mit Gehäuse, **dadurch gekennzeichnet, dass** das Gehäuse (71) über einen Teil der Länge des Trägerkörpers (91) zumindest bereichsweise seitlich von diesem beabstandet ist und der Trägerkörper (91) derart ausgebildet ist, dass der dem beabstandeten Gehäusebereich (71a) gegenüberliegende Seitenbereich (91b) mediendurchlässig ist.

20. Katalysator mit einem Trägerkörper nach einem der Ansprüche 1 bis 19.

## Claims

1. A catalytic converter substrate with a large number of continuous flow paths for a fluid medium and with carrier elements for a catalyst material extending in the longitudinal direction of the flow paths, wherein carrier elements (3, 7, 17, 27, 33, 45, 55, 61) are provided which, at least in some areas, display edges (5, 8, 18, 59) around which flow is possible in the longitudinal direction of the flow path, **characterized in that** the edges of the carrier elements around which flow is possible are designed as. web-like foil folds of foil sections (3, 7, 17, 55) or as profiles (27, 28, 33, 45, 61, 69, 86) around which flow is permitted around their full circumference, at least at sections, and that stiffening elements (6, 9, 12, 14, 20, 26, 42, 46, 60, 62, 74) and/or connecting elements (29, 34, 53, 68) connecting the carrier elements are provided acting on the carrier elements (3, 7, 11, 17, 27, 28, 33, 43, 61, 69) having edges around flow is possible and that are designed in such a way that a change in position of the carrier elements (3, 7, 11, 17, 27, 28, 33, 43, 61, 69) is restricted or their vibration properties are changed.

2. Substrate according to Claim 1, **characterised in that** the overall length of the edges (5, 8, 18, 59) around which flow is possible along a flow path is at least one quarter of the length of the substrate (66).

3. Substrate according to Claim 1 or 2, **characterised in that** the substrate (66) is constructed from profiled foil layers (1, 10, 16) arranged one above the other and the carrier elements are designed as web-shaped foil folds (3, 7, 11) of the foil layers (1, 10, 16).

4. A substrate according to claim 3, **characterized in that** the web-like foil folds are designed in form of fold webs of foil sections having a folding angle of less than 30° and having a distance of the edges around which flow is possible of a multiple of the circumscribing diameter of the web folds.

5. A substrate according to one of claims 1 to 4, **characterized in that** the carrier elements are designed as foil folds in form of notched tabs (7) of foil layers.

6. Substrate according to Claim 5, **characterised in that** the carrier elements (3, 7, 11, 17, 27, 28, 33, 45, 55) are located within flow ducts (2, 10a, 25, 41) being restricted by foil layers (1, 10, 40, 101, 102) which restrict the exchange of medium transverse to the longitudinal direction of the flow paths.

7. Substrate according to claim 6, **characterised in that** the carrier elements (3, 7, 17, 27, 33, 45, 55, 61) are located at the centre of the flow ducts (2, 10a, 25, 41).

8. Substrate according to one of Claims 1 to 7, **characterised in that** the carrier elements (28) display edges around which flow is possible that are of arch-shaped design, at least in some sections.

9. Substrate according to one of Claims 1 to 8, **characterised in that** the carrier elements (28) display outer surfaces curved in scoop-like fashion, at least in some sections, that set the medium in rotary motion as it flows past.

10. Substrate according to one of Claims 1 to 9, **characterised in that** at least one area (51, 100) of the substrate with a large number of adjacent carrier elements (52, 69, 104, 111) is provided that permits an unobstructed gas exchange transverse to the longitudinal direction of the flow paths.

11. Substrate according to one of claims 1 to 10, **characterised in that** connecting elements are provided, at least in partial volume areas of the substrate, and that the cross section of the connecting elements (29, 34, 46, 68) is dimensioned in such a way that the flow resistance in the longitudinal direction through the substrate is not significantly increased.

12. Substrate according to one of Claims 1 to 11, cha**characterised in that** the carrier elements are designed as expanded-metal layers (32, 52) or wire meshes (21, 44, 46).

13. Substrate according to one of Claims 1 to 12, **characterised in that** stiffening elements (6, 12, 20, 26) are provided, which extend perpendicular and/or parallel to the foil layers (1, 10, 16, 23) making up the substrate.

14. Substrate according to one of Claims 1 to 13, **characterised in that** stiffening elements (12, 14, 20, 60) are provided, which act on the connecting elements (29, 34, 46, 68) and are designed in such a way that a change in position of the connecting elements is restricted.

15. Substrate according to one of claims 1 to 14, **characterised in that** the stiffening elements (6, 12, 20, 26) are fastened to the foil layers (1, 10, 16, 23) and/or carrier elements (3, 7, 17, 27, 33, 45, 55, 61) and/or connecting elements (29, 34, 46, 68) in a manner capable of absorbing tensile forces.

16. Substrate according to one of claims 1 to 15, **characterised in that** the stiffening elements (6, 12, 20, 26, 74) or webs laterally protruding from the profiles around which flow is possible are provided, which are fastened to a housing (71) surrounding the substrate, or to wall sections (54) passing through the substrate, in a manner capable of absorbing tensile forces.

17. Substrate according to one of Claims 1 to 16, **characterised in that** the substrate displays several areas (90, 91) a distance away from the face ends in the direction of flow and following each other in the direction of flow, which extend in the lateral direction across one or more carrier elements, and that at least two of these areas (90, 91) differ as regards their structure.

18. Substrate according to one of Claims 1 to 17, **characterised in that** the inlet and/or outlet areas of the substrate or of substrate areas (90, 91) are provided with means (51) which permit a change in the direction of flow of the inflowing or outflowing medium.

19. Substrate according to one of Claims 1 to 18, having a housing, **characterised in that** the housing (71) is laterally separated from the substrate (91) over part of the length of the substrate (91), at least in some areas, and the substrate (91) is designed in such a way that the side area (91b) opposite the separated housing area (71a) is permeable to the medium.

20. Catalyst comprising a substrate according to one of claims 1 to 19.

## Revendications

1. Support de pot catalytique comprenant une multitude de voies d'écoulement continues pour un fluide et d'éléments supports pour un matériau catalyseur s'étendant le long des voies d'écoulement, des éléments supports (3, 7, 17, 27, 33, 45, 55, 61) présentant des arêtes contournées par le fluide (5, 8, 18, 59) au moins par endroits le long des voies d'écoulement étant prévus, **caractérisé en ce que** les arêtes contournées par le fluide des éléments supports sont réalisées sous la forme de plis nervurés réalisés en segments de tôles (3, 7, 17, 55) ou sous la forme de profilés (27, 28, 33, 45, 61, 69, 86) contournés par le fluide sur la totalité de leur pourtour au moins par endroits, et **en ce que** des raidisseurs (6, 9, 12, 14, 20, 26, 42, 46, 60, 62, 74) et/ou des éléments de fixation (29, 34, 53, 68) reliant les éléments supports entre eux sont prévus, lesquels engagent respectivement au niveau des éléments supports ( 3, 7, 11, 17, 27, 28, 33, 43, 61, 69) les arêtes contournées par le fluide et sont conçus pour limiter le changement de position des éléments supports (3, 7, 11, 27, 28, 33, 43, 61, 69) munis d'arêtes contournées par le fluide, ou encore pour modifier leur comportement aux vibrations.

2. Support selon la revendication 1, **caractérisé en ce que** la longueur cumulée des arêtes contournées par le fluide (5, 8, 18, 59), disposées le long d'une voie d'écoulement, correspond au minimum à un quart de la longueur du support de pot (66).

3. Support selon l'une des revendications 1 ou 2, **caractérisé en ce que** le support (66) est constitué de couches de tôles profilées superposées (1, 10, 16) et **en ce que** les éléments supports sont réalisés sous la forme de plis nervurés (3, 7, 11) des couches de tôles (1, 10, 16).

4. Support selon la revendication 3, **caractérisé en ce que** les plis nervurés sont conçus en tant que nervure de pliage de segments de tôles avec un angle de pliage inférieur à 30° et présentent un écart entre arêtes contournées par le fluide égal à un multiple du diamètre du cercle circonscrit des nervures de pliage.

5. Support selon l'une quelconque des revendications 1 à 4, **caractérisé en ce que** les éléments supports sont réalisés en tant qu'encoches (7) dans les couches de tôles.

6. Support selon la revendication 5, **caractérisé en ce que** les éléments supports (3, 7, 11, 17, 27, 28, 33, 45, 55) sont disposés à l'intérieur des canaux d'écoulement (2, 10a, 25, 41) délimites par les couches de tôles (1, 10, 40, 101, 102) lesquels réduisent les échanges de fluide dans un sens perpendiculaire à celui des voies d'écoulement.

7. Support selon la revendication 6, **caractérisé en ce que** les éléments supports (3, 7, 17, 27, 33, 45, 55, 61) sont disposés au centre des canaux d'écoulement (2, 10a, 25, 41).

8. Support selon l'une quelconque des revendications 1 à 7, **caractérisé en ce que** les éléments supports (28) présentent, au moins partiellement, des arêtes contournées par le fluide conçue de manière cintrée.

9. Support selon l'une quelconque des revendications 1 à 8, **caractérisé en ce que** les éléments supports (28) présentent au moins partiellement des faces extérieures courbées en forme de pelle qui donnent un mouvement de rotation au fluide qui passe.

10. Support selon l'une quelconque des revendications 1 à 9, **caractérisé en ce qu'**au moins une zone (51, 100) du support de pot permettant un échange gazeux libre perpendiculairement au sens longitudinal des voies d'écoulement est prévue avec une multitude d'éléments supports (52, 69, 104, 111) voisins.

11. Support selon l'une quelconque des revendications 1 à 10, **caractérisé en ce que** les éléments de fixation sont prévus au moins dans des zones volumétriques partielles du support et **en ce que** la section des éléments de fixation (29, 34, 46, 68) est dimensionnée pour ne pas augmenter de façon significative la résistance à l'écoulement longitudinal à l'intérieur du support de pot.

12. Support selon l'une quelconque des revendications 1 à 11, **caractérisé en ce que** les éléments supports sont réalisés en tant que de couches de métal déployé (32, 52) ou de grilles (21, 44, 46).

13. Support selon l'une quelconque des revendications 1 à 12, **caractérisé en ce que** les raidisseurs (6, 12, 20, 26) s'étendent perpendiculairement et/ou parallèlement aux couches de tôles (1, 10, 16, 23) qui forment le support.

14. Support selon l'une quelconque des revendications 1 à 13, **caractérisé en ce que** des raidisseurs (12, 14, 60) sont prévus lesquels se mettent en prise au niveau des éléments de fixation (29, 34, 46, 68) et sont conçus pour limiter le changement de position des éléments de fixation.

15. Support selon l'une quelconque des revendications 1 à 14, **caractérisé en ce que** les raidisseurs (6, 12, 20, 26) sont fixés en réduisant les tensions aux couches de tôles (1, 10, 16, 23) et/ou aux éléments supports (3, 7, 17, 27, 33, 45, 55, 61) et/ou aux éléments de fixation (29, 34, 46, 68).

16. Support selon l'une quelconque des revendications 1 à 15, **caractérisé en ce que** des raidisseurs (6, 12, 20, 26, 74) ou des attaches (53, 70) partant latéralement des profilés au pourtour contourné en totalité par le fluide sont prévus lesquels sont fixés en réduisant les tensions sur l'un des carters (71) entourant le support de pot ou sur les sections de paroi (54) longeant le support.

17. Support selon l'une quelconque des revendications 1 à 16, **caractérisé en ce que** le support comporte plusieurs zones (90, 91) qui se succèdent dans le sens longitudinal espacés des faces frontales et qui s'étendent respectivement latéralement sur un ou plusieurs des éléments supports, et **en ce qu'**au moins deux de ces zones (90, 91) ont une structure différente.

18. Support selon l'une des revendications 1 à 17, **caractérisé en ce que** les zones d'entrée et/ou de sortie du support de pot ou de zones du support de pot (90, 91) sont munies d'organes (51) destinés à modifier le sens d'écoulement du fluide entrant ou sortant.

19. Support selon l'une quelconque des revendications 1 à 18 avec son carter, **caractérisé en ce que** le carter (71), sur une partie de la longueur du support (91), est écarté latéralement de celui-ci au moins par endroits, et **en ce que** le support de pot (91) est conçu de telle sorte que la zone frontale (71a) faisant face à la zone de carter à l'écart (91b) laisse passer le fluide.

20. Pot catalytique avec un support selon l'une quelconque des revendications 1 à 19.
